# EUROPEAN PATENT SPECIFICATION

(11) **EP 3 051 426 B1**
(45) Date of publication and mention of the grant of the patent: **26.06.2019**
(21) Application number: 14853757.4
(22) Date of filing: 15.10.2014
(51) Int. Cl.: G06F 15/163, G06F 3/06, G06F 9/50, G06F 12/02, G06F 17/30, G06F 12/06, G06F 9/54, G06F 12/1072

(54) **METHOD, DEVICE, AND SYSTEM FOR ACCESSING MEMORY**
VERFAHREN, VORRICHTUNG UND SYSTEM ZUM ZUGREIFEN AUF EINEN SPEICHER
PROCÉDÉ, DISPOSITIF ET SYSTÈME D'ACCÈS À UNE MÉMOIRE

(30) Priority: 18.10.2013 CN 201310492067
(43) Date of publication of application: 03.08.2016
(73) Proprietor: Huawei Technologies Co., Ltd., Longgang District Shenzhen, Guangdong 518129 (CN)
(72) Inventor: GU, Xiongli, Shenzhen Guangdong 518129 (CN); WANG, Haibin, Shenzhen Guangdong 518129 (CN); CUI, Xiaosong, Shenzhen Guangdong 518129 (CN)
(74) Representative: Thun, Clemens
(86) International application number: PCT/CN2014/088618
(87) International publication number: WO 2015/055117

(56) References cited:
- US-A1- 2002 169 938
- US-A1- 2010 161 909
- US-A1- 2010 274 772
- US-A1- 2012 047 223
- US-A1- 2012 159 115

## Description

### TECHNICAL FIELD

The present invention relates to the computer field, and in particular, to a memory access method, device, and system.

### BACKGROUND

Cloud computing (Cloud Computing) is a new Internet computing mode developed and converged from conventional computer technologies and network technologies. The cloud computing aims to form, by integrating data center resources, a system that exhibits a powerful computing capability, and use the system to provide services for users. As an important aspect in resource management, memory resources are directly associated with running efficiency of the system, therefore, the memory resources need to be properly allocated, so that the memory resources can be allocated in a balanced manner, and waste of the memory resources is reduced.

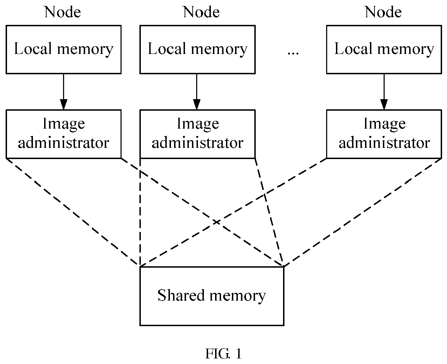

Currently, a distributed shared memory (Distributed Shared Memor, DSM for short) technology provides a memory resource management and access method, and the technology logically implements a shared memory based on physically distributed memories, as shown in FIG. 1. In this shared memory mode, in a distributed system, a memory that can be shared by all nodes in the system is provided. The shared memory may be paged virtual memory space, where virtual memory space of each page may be provided by an independent memory of a node. A DSM performs addressing on the entire virtual memory space, so that all the nodes can use the entire shared memory. In the DSM, each node can not only access, at a memory speed, single-page virtual memory space formed by a memory provided by the node, but also access single-page virtual memory space formed by a memory provided by another remote node.

In a process of implementing the foregoing DSM, it is found that at least the following problem exists in the prior art: the DSM is generally implemented by an OS or a user programming library at a software layer, or may be implemented depending on a special network adapter or hardware that maintains Cache consistency; as a result, operation overheads and implementation costs of the DSM are relatively high. In addition, the DSM performs unified addressing on memory, and provides a single image for programmers. The DSM further needs to maintain data consistency, and a granularity of shared data is relatively small. These features result in that the DSM cannot favorably support flexible resource scheduling when an application load changes dynamically at a data center. US 2002/169938 A1 describes a method of performing remote address translation in a multiprocessor system including determining a connection descriptor and a virtual address at a local node, accessing a local connection table at the local node using the connection descriptor to produce a system node identifier for a remote node and a remote address space number, communicating the virtual address and remote address space number to the remote node, and translating the virtual address to a physical address at the remote node.

### SUMMARY

Embodiments of the present invention provide a memory access method, device, and system, which reduce operation and maintenance overheads of a system, and implement flexible scheduling of memory resources.

To achieve the foregoing objectives, the following technical solutions are adopted in the embodiments of the present invention:
According to a first aspect, an embodiment of the present invention provides a memory access method, applied to a cloud control device on the side of a requesting node on a cloud computing network, where the method includes:
receiving, by the cloud control device, a request packet that is sent by the requesting node and is for accessing to-be-accessed data stored in a memory resource provided by a contributing node to the requesting node for use, where the request packet includes identification information of the requesting node and a first physical address of the to-be-accessed data, and the first physical address of the to-be-accessed data is a physical address of the to-be-accessed data, on the requesting node;
querying, by the cloud control device, a preset first mapping relationship according to the first physical address of the to-be-accessed data to acquire identification information of the contributing node, where the first mapping relationship includes a mapping relationship between the identification information of the contributing node and a physical address that is of the memory resource provided by the contributing node and is on the requesting node; and
sending, by the cloud control device, an access request message for accessing the to-be-accessed data to a cloud control device on the side of the contributing node according to the identification information of the contributing node, so that the cloud control device on the side of the contributing node queries a second mapping relationship according to the identification information of the requesting node in the access request message to acquire a second physical address of the to-be-accessed data, and transmits the second physical address of the to-be-accessed data and the access request message to the contributing node, so that the contributing node completes an access operation on the to-be-accessed data at the second physical address of the to-be-accessed data according to the access request message, where the access request message includes the identification information of the requesting node, the second mapping relationship includes a mapping relationship between the identification information of the requesting node and a physical address that is of the memory resource provided by the contributing node and is on the contributing node, and the second physical address of the to-be-accessed data is a physical address of the to-be-accessed data, on the contributing node.

According to a first possible implementation manner, with reference to the first aspect, the cloud control device receives the request packet that is sent by the requesting node and is for accessing the to-be-accessed data stored in the memory resource provided by the contributing node to the requesting node for use, where the request packet includes a read access request packet; and
accordingly, the sending, by the cloud control device, an access request message for accessing the to-be-accessed data to a cloud control device on the side of the contributing node according to the identification information of the contributing node, so that the cloud control device on the side of the contributing node queries a second mapping relationship according to the identification information of the requesting node in the access request message to acquire a second physical address of the to-be-accessed data, and transmits the second physical address of the to-be-accessed data and the access request message to the contributing node, so that the contributing node completes an access operation on the to-be-accessed data at the second physical address of the to-be-accessed data according to the access request message, includes:
sending, by the cloud control device, a read access request message of the to-be-accessed data to the cloud control device on the side of the contributing node according to the identification information of the contributing node, so that the cloud control device on the side of the contributing node queries the second mapping relationship according to the identification information of the requesting node in the read access request to acquire the second physical address of the to-be-accessed data, and transmits the second physical address of the to-be-accessed data and the access request message to the contributing node, so that the contributing node completes a read operation on the to-be-accessed data at the second physical address of the to-be-accessed data according to the access request message, and transmits a feedback message to the cloud control device of the contributing node, so that the cloud control device on the side of the contributing node sends the feedback message to the cloud control device on the side of the requesting node, where the feedback message includes the identification information of the contributing node and the to-be-accessed data read by the contributing node.

According to a second possible implementation manner, with reference to the first possible implementation manner, the method further includes:
receiving, by the cloud control device, the feedback message sent by the cloud control device on the side of the contributing node;
querying, by the cloud control device, the first mapping relationship according to the identification information of the contributing node to acquire the first physical address of the to-be-accessed data; and
sending, by the cloud control device, the to-be-accessed data read by the contributing node and the first physical address of the to-be-accessed data to the requesting node, so that the requesting node completes reading the to-be-accessed data.

According to a third possible implementation manner, with reference to the first aspect, the cloud control device receives the request packet that is sent by the requesting node and is for accessing the to-be-accessed data stored in the memory resource provided by the contributing node to the requesting node for use, where the request packet includes a write access request packet and to-be-written data, and the write access request packet includes the identification information of the requesting node and a first physical address of the to-be-written data; and
accordingly, the querying, by the cloud control device, a preset first mapping relationship according to the first physical address of the to-be-accessed data to acquire identification information of the contributing node; and
the sending, by the cloud control device, an access request message for accessing the to-be-accessed data to a cloud control device on the side of the contributing node according to the identification information of the contributing node, so that the cloud control device on the side of the contributing node queries a second mapping relationship according to the identification information of the requesting node in the access request message to acquire a second physical address of the to-be-accessed data, and transmits the second physical address of the to-be-accessed data and the access request message to the contributing node, so that the contributing node completes an access operation on the to-be-accessed data at the second physical address of the to-be-accessed data according to the access request message, includes:
   querying, by the cloud control device, the preset first mapping relationship according to the first physical address of the to-be-written data to acquire the identification information of the contributing node; and
   sending, by the cloud control device, the write access request message to the cloud control device on the side of the contributing node according to the identification information of the contributing node, where the write access request message includes the write access request packet and the to-be-written data, so that the cloud control device on the side of the contributing node queries the second mapping relationship according to the identification information of the requesting node in the write access request message to acquire a second physical address of the to-be-written data, and transmits the second physical address of the to-be-written data and the to-be-written data to the contributing node, so that the contributing node writes the to-be-written data to the second physical address of the to-be-written data.

According to a second aspect, an embodiment of the present invention provides a memory access method on a cloud computing network, applied to a cloud control device on the side of a contributing node on the cloud computing network, where the method includes:
receiving, by the cloud control device, an access request message that is of to-be-accessed data and sent by a cloud control device on the side of a requesting node, where the access request message includes identification information of the requesting node;
querying, by the cloud control device, a preset second mapping relationship according to the identification information of the requesting node to acquire a second physical address of the to-be-accessed data, where the second physical address of the to-be-accessed data is a physical address of the to-be-accessed data, on the contributing node, and the second mapping relationship includes a mapping relationship between the identification information of the requesting node and a physical address that is of a memory resource provided by the contributing node and is on the contributing node; and
transmitting, by the cloud control device, the second physical address of the to-be-accessed data and the access request message to the contributing node, so that the contributing node completes an access operation on the to-be-accessed data at the second physical address of the to-be-accessed data according to the access request message.

According to a first possible implementation manner, with reference to the second aspect, the cloud control device receives the access request message that is of the to-be-accessed data and sent by the cloud control device on the side of the requesting node, where the access request message includes a read access request message; and
accordingly, the transmitting, by the cloud control device, the second physical address of the to-be-accessed data and the access request message to the contributing node, so that the contributing node completes an access operation on the to-be-accessed data at the second physical address of the to-be-accessed data according to the access request message, includes:
transmitting, by the cloud control device, the second physical address of the to-be-accessed data and the read access request message to the contributing node, so that the contributing node completes a read operation on the to-be-accessed data at the second physical address of the to-be-accessed data according to the read access request message, and transmits a feedback message to the cloud control device, where the feedback message includes identification information of the contributing node and the to-be-accessed data read by the contributing node.

According to a second possible implementation manner, with reference to the first possible implementation manner, the method further includes:
receiving, by the cloud control device, the feedback message transmitted by the contributing node, and querying the second mapping relationship according to the second physical address of the to-be-accessed data to obtain the identification information of the requesting node; and
sending, by the cloud control device, the feedback message to the cloud control device on the side of the requesting node according to the identification information of the requesting node, where the feedback message includes the identification information of the contributing node and the to-be-accessed data read by the contributing node.

According to a third possible implementation manner, with reference to the second aspect, the cloud control device receives the access request message that is of the to-be-accessed data and sent by the cloud control device on the side of the requesting node, where the access request message includes a write access request packet and to-be-written data; and
accordingly, the querying, by the cloud control device, a second mapping relationship according to the identification information of the requesting node to acquire a second physical address of the to-be-accessed data; and
the transmitting, by the cloud control device, the second physical address of the to-be-accessed data and the access request message to the contributing node, so that the contributing node completes an access operation on the to-be-accessed data at the second physical address of the to-be-accessed data according to the access request message, includes:
   querying, by the cloud control device, the preset second mapping relationship according to the identification information of the requesting node to acquire a second physical address of the to-be-written data; and
   transmitting, by the cloud control device, the second physical address of the to-be-written data and the to-be-written data to the contributing node, so that the contributing node writes the to-be-written data to the second physical address of the to-be-written data.

According to a third aspect, an embodiment of the present invention provides a memory access method on a cloud computing network, including:
receiving, by a global resource manager, a resource request message sent by a requesting node, where the resource request message includes identification information of the requesting node, a size of a memory resource required by the requesting node, and a physical address of the memory resource on the requesting node;
querying, by the global resource manager, a global resource status table according to the size of the memory resource required by the requesting node and the identification information of the requesting node, and acquiring, according to a location of each node in the global resource status table and a shortest path principle, a contributing node whose memory resource remaining status in the global resource status table can meet the memory resource required by the requesting node, where the global resource status table includes identification information, the location, and a memory resource remaining status that are of each node; and
setting, by the global resource manager, a first mapping relationship applied to a cloud control device on the side of the requesting node, and setting a second mapping relationship applied to a cloud control device on the side of the contributing node, where the first mapping relationship includes a mapping relationship between identification information of the contributing node and a physical address that is of a memory resource provided by the contributing node and is on the requesting node, and the second mapping relationship includes a mapping relationship between the identification information of the requesting node and a physical address that is of the memory resource provided by the contributing node and is on the contributing node.

According to a first possible implementation manner, with reference to the third aspect, the method further includes:
receiving, by the global resource manager, an application message that is sent by the requesting node after the requesting node uses up the memory resource provided by the contributing node, where the application message includes the identification information of the requesting node and the physical address that is of the memory resource provided by the contributing node and is on the requesting node;
querying, by the global resource manager, the first mapping relationship according to the physical address that is of the memory resource provided by the contributing node and is on the requesting node, to obtain an identifier of the contributing node, setting the second mapping relationship that is on the contributing node and is corresponding to an identifier of the requesting node to be invalid, releasing the memory resource provided by the contributing node, and setting the memory resource as a remaining memory resource of the contributing node; and
setting, by the global resource manager, the first mapping relationship on the side of the requesting node to be invalid.

According to a fourth aspect, an embodiment of the present invention provides a cloud control device, applied to the side of a requesting node on a cloud computing network, where the cloud control device includes:
a first communication unit, configured to receive a request packet that is sent by the requesting node and is for accessing to-be-accessed data stored in a memory resource provided by a contributing node to the requesting node for use, where the request packet includes identification information of the requesting node and a first physical address of the to-be-accessed data, and the first physical address of the to-be-accessed data is a physical address of the to-be-accessed data, on the requesting node;
a memory cloud controller, configured to query a preset first mapping relationship according to the first physical address of the to-be-accessed data to acquire identification information of the contributing node, where the first mapping relationship includes a mapping relationship between the identification information of the contributing node and a physical address that is of the memory resource provided by the contributing node and is on the requesting node; and
a second communication unit, configured to send an access request message for accessing the to-be-accessed data to a cloud control device on the side of the contributing node according to the identification information of the contributing node.

According to a first possible implementation manner, with reference to the fourth aspect, the first communication unit is configured to receive the request packet that is sent by the requesting node and is for accessing the to-be-accessed data stored in the memory resource provided by the contributing node to the requesting node for use, where the request packet includes a read access request packet; and
accordingly, the memory cloud controller further includes:
a remote memory management unit RMMU, configured to query the preset first mapping relationship according to the first physical address of the to-be-accessed data to acquire the identification information of the contributing node; and
an external packet generation unit, configured to: generate a read access request message of the to-be-accessed data, and transmit the read access request for accessing the to-be-accessed data to the second communication unit; where
the second communication unit is configured to send the read access request message of the to-be-accessed data to the cloud control device on the side of the contributing node according to the identification information of the contributing node.

According to a second possible implementation manner, with reference to the first possible implementation manner, the second communication unit is further configured to receive the feedback message sent by the cloud control device on the side of the contributing node, where the feedback message includes the identification information of the contributing node and the to-be-accessed data read by the contributing node;
the memory cloud controller further includes a packet parsing unit and an internal packet generation unit;
the packet parsing unit is configured to parse the feedback message;
the RMMU is further configured to query the first mapping relationship according to the identification information of the contributing node in the parsed feedback message to acquire the first physical address of the to-be-accessed data;
the internal packet generation unit is configured to: generate the to-be-accessed data that is in the parsed feedback message and read by the contributing node, and the first physical address of the to-be-accessed data, into a packet format that can be used to communicate with the requesting node, and transmit the packet to the first communication unit; and
the first communication unit is further configured to send the to-be-accessed data that is in the feedback message and read by the contributing node, and the first physical address of the to-be-accessed data to the requesting node, so that the requesting node completes reading the to-be-accessed data.

According to a third possible implementation manner, with reference to the fourth aspect, the first communication unit is configured to receive the request packet that is sent by the requesting node and is for accessing the to-be-accessed data stored in the memory resource provided by the contributing node to the requesting node for use, where the request packet includes a write access request packet and to-be-written data, and the write access request packet includes the identification information of the requesting node and a first physical address of the to-be-written data;
accordingly, an RMMU in the memory cloud controller is configured to query the preset first mapping relationship according to the first physical address of the to-be-written data to acquire the identification information of the contributing node;
an external packet generation unit packs the write access request packet and the to-be-written data into a write access request message for communication between nodes, and transmits the write access request message to the second communication unit; and
the second communication unit is configured to send the write access request message to the cloud control device on the side of the contributing node according to the identification information of the contributing node, where the write access request message includes the write access request packet and the to-be-written data.

According to a fifth aspect, an embodiment of the present invention provides a cloud control device, applied to the side of a contributing node on a cloud computing network, where the cloud control device includes:
a second communication unit, configured to receive an access request message that is of to-be-accessed data and sent by a cloud control device on the side of a requesting node, where the access request message includes identification information of the requesting node;
a memory cloud controller, configured to query a preset second mapping relationship according to the identification information of the requesting node to acquire a second physical address of the to-be-accessed data, where the second physical address of the to-be-accessed data is a physical address of the to-be-accessed data, on the contributing node, and the second mapping relationship includes a mapping relationship between the identification information of the requesting node and a physical address that is of a memory resource provided by the contributing node and is on the contributing node; and
a first communication unit, configured to send the second physical address of the to-be-accessed data and the access request message to the contributing node.

According to a first possible implementation manner, with reference to the fifth aspect, the second communication unit is configured to receive the access request message that is of the to-be-accessed data and sent by the cloud control device on the side of the requesting node, where the access request message includes a read access request message; and
accordingly, the memory cloud controller includes:
a packet parsing unit, configured to: parse the read access request message, and transmit the parsed read access request message to a remote memory management unit RMMU;
the RMMU, configured to obtain the second physical address of the to-be-accessed data by querying the second mapping relationship; and
an internal packet generation unit, configured to transmit the second physical address of the to-be-accessed data and the read access request message to the first communication unit; where
the first communication unit is configured to transmit the second physical address of the to-be-accessed data and the read access request message to the contributing node.

According to a second possible implementation manner, with reference to the first possible implementation manner,
the first communication unit is further configured to receive the feedback message transmitted by the contributing node, where the feedback message includes identification information of the contributing node and the to-be-accessed data read by the contributing node;
the RMMU in the memory cloud controller is further configured to query the second mapping relationship according to the second physical address of the to-be-accessed data to obtain the identification information of the requesting node;
the memory cloud controller further includes an external packet generation unit, configured to: pack the feedback message in a format by using which communication can be performed between nodes, and transmit the packed feedback message to the second communication unit; and
the second communication unit is further configured to send the feedback message to the cloud control device on the side of the requesting node according to the identification information of the requesting node.

According to a third possible implementation manner, with reference to the fifth aspect, the second communication unit is configured to receive the access request message that is of the to-be-accessed data and sent by the cloud control device on the side of the requesting node, where the access request message includes a write access request packet and to-be-written data;
accordingly, a packet parsing unit in the memory cloud controller is configured to: parse the access request message, and transmit information obtained by parsing to the RMMU;
the RMMU is configured to query the preset second mapping relationship according to the identification information of the requesting node to acquire the second physical address of the to-be-written data;
the internal packet generation unit is configured to: generate the second physical address of the to-be-written data and the parsed access request message into a packet format that can be used to communicate with the contributing node, and transmit the packet to the first communication unit; and
the first communication unit is configured to send the second physical address of the to-be-written data and the to-be-written data to the contributing node, so that the contributing node writes the to-be-written data to the second physical address of the to-be-written data.

According to a sixth aspect, an embodiment of the present invention provides a global resource manager, including:
a receiver, configured to receive a resource request message sent by a requesting node, where the resource request message includes identification information of the requesting node, a size of a memory resource required by the requesting node, and a physical address of the memory resource on the requesting node;
an allocator, configured to: query a global resource status table according to the size of the memory resource required by the requesting node and the identification information of the requesting node, and acquire, according to a location of each node in the global resource status table and a shortest path principle, a contributing node whose memory resource remaining status in the global resource status table can meet the memory resource required by the requesting node, where the global resource status table includes identification information, the location, and a memory resource remaining status that are of each node; and
a setter, configured to: set a first mapping relationship applied to a cloud control device on the side of the requesting node, and set a second mapping relationship applied to a cloud control device on the side of the contributing node, where the first mapping relationship includes a mapping relationship between identification information of the contributing node and a physical address that is of a memory resource provided by the contributing node and is on the requesting node, and the second mapping relationship includes a mapping relationship between the identification information of the requesting node and a physical address that is of the memory resource provided by the contributing node and is on the contributing node.

According to a first possible implementation manner, with reference to the sixth aspect, the receiver is further configured to receive an application message that is sent by the requesting node after the requesting node uses up the memory resource provided by the contributing node, where the application message includes the identification information of the requesting node and the physical address that is of the memory resource provided by the contributing node and is on the requesting node; and
the setter is further configured to: query the first mapping relationship according to the physical address that is of the memory resource provided by the contributing node and is on the requesting node, to obtain an identifier of the contributing node, set the second mapping relationship that is on the cloud control device on the side of the contributing node and is corresponding to an identifier of the requesting node to be invalid, release the memory resource provided by the contributing node, and set the memory resource as a remaining memory resource of the contributing node; and
set the first mapping relationship on the cloud control device on the side of the requesting node to be invalid.

According to a seventh aspect, an embodiment of the present invention provides a cloud control device, applied to the side of a requesting node on a cloud computing network, where the cloud control device includes:
a receiving unit, configured to receive a request packet that is sent by the requesting node and is for accessing to-be-accessed data stored in a memory resource provided by a contributing node to the requesting node for use, where the request packet includes identification information of the requesting node and a first physical address of the to-be-accessed data, and the first physical address of the to-be-accessed data is a physical address of the to-be-accessed data, on the requesting node;
an acquiring unit, configured to query a preset first mapping relationship according to the first physical address of the to-be-accessed data to acquire identification information of the contributing node, where the first mapping relationship includes a mapping relationship between the identification information of the contributing node and a physical address that is of the memory resource provided by the contributing node and is on the requesting node; and
a sending unit, configured to send an access request message for accessing the to-be-accessed data to a cloud control device on the side of the contributing node according to the identification information of the contributing node.

According to a first possible implementation manner, with reference to the seventh aspect,
the receiving unit is configured to receive the request packet that is sent by the requesting node and is for accessing the to-be-accessed data stored in the memory resource provided by the contributing node to the requesting node for use, where the request packet includes a read access request packet; and
accordingly, the sending unit is configured to send a read access request message of the to-be-accessed data to the cloud control device on the side of the contributing node according to the identification information of the contributing node.

According to a second possible implementation manner, with reference to the first possible implementation manner,
the receiving unit is further configured to receive the feedback message sent by the cloud control device on the side of the contributing node, where the feedback message includes the identification information of the contributing node and the to-be-accessed data read by the contributing node;
the acquiring unit is further configured to query the first mapping relationship according to the identification information of the contributing node to acquire the first physical address of the to-be-accessed data; and
the sending unit is further configured to send the to-be-accessed data read by the contributing node and the first physical address of the to-be-accessed data to the requesting node, so that the requesting node completes reading the to-be-accessed data.

According to a third possible implementation manner, with reference to the seventh aspect, the receiving unit is configured to receive the request packet that is sent by the requesting node and is for accessing the to-be-accessed data stored in the memory resource provided by the contributing node to the requesting node for use, where the request packet includes a write access request packet and to-be-written data, and the write access request packet includes the identification information of the requesting node and a first physical address of the to-be-written data;
accordingly, the acquiring unit is configured to query the preset first mapping relationship according to the first physical address of the to-be-written data to acquire the identification information of the contributing node; and
the sending unit is configured to send the write access request message to the cloud control device on the side of the contributing node according to the identification information of the contributing node, where the write access request message includes the write access request packet and the to-be-written data.

According to an eighth aspect, an embodiment of the present invention provides a cloud control device, applied to the side of a contributing node on a cloud computing network, where the cloud control device includes:
a receiving unit, configured to receive an access request message that is of to-be-accessed data and sent by a cloud control device on the side of a requesting node, where the access request message includes identification information of the requesting node;
an acquiring unit, configured to query a preset second mapping relationship according to the identification information of the requesting node to acquire a second physical address of the to-be-accessed data, where the second physical address of the to-be-accessed data is a physical address of the to-be-accessed data, on the contributing node, and the second mapping relationship includes a mapping relationship between the identification information of the requesting node and a physical address that is of a memory resource provided by the contributing node and is on the contributing node; and
a sending unit, configured to send the second physical address of the to-be-accessed data and the access request message to the contributing node.

According to a first possible implementation manner, with reference to the eighth aspect, the receiving unit is configured to receive the access request message that is of the to-be-accessed data and sent by the cloud control device on the side of the requesting node, where the access request message includes a read access request message; and
accordingly, the sending unit is configured to transmit the second physical address of the to-be-accessed data and the read access request message to the contributing node.

According to a second possible implementation manner, with reference to the first possible implementation manner, the receiving unit is further configured to receive the feedback message transmitted by the contributing node, where the feedback message includes identification information of the contributing node and the to-be-accessed data read by the contributing node;
the acquiring unit is further configured to query the second mapping relationship according to the second physical address of the to-be-accessed data to obtain the identification information of the requesting node; and
the sending unit is further configured to send the feedback message to the cloud control device on the side of the requesting node according to the identification information of the requesting node.

According to a third possible implementation manner, with reference to the eighth aspect, the receiving unit is configured to receive the access request message that is of the to-be-accessed data and sent by the cloud control device on the side of the requesting node, where the access request message includes a write access request packet and to-be-written data;
accordingly, the acquiring unit is configured to query the preset second mapping relationship according to the identification information of the requesting node to acquire a second physical address of the to-be-written data; and
the sending unit is configured to send the second physical address of the to-be-written data and the to-be-written data to the contributing node, so that the contributing node writes the to-be-written data to the second physical address of the to-be-written data.

According to a ninth aspect, an embodiment of the present invention provides a global resource manager, including:
a receiving unit, configured to receive a resource request message sent by a requesting node, where the resource request message includes identification information of the requesting node, a size of a memory resource required by the requesting node, and a physical address of the memory resource on the requesting node;
an acquiring unit, configured to: query a global resource status table according to the size of the memory resource required by the requesting node and the identification information of the requesting node, and acquire, according to a location of each node in the global resource status table and a shortest path principle, a contributing node whose memory resource remaining status in the global resource status table can meet the memory resource required by the requesting node, where the global resource status table includes identification information, the location, and a memory resource remaining status that are of each node; and
a setting unit, configured to: set a first mapping relationship applied to a cloud control device on the side of the requesting node, and set a second mapping relationship applied to a cloud control device on the side of the contributing node, where the first mapping relationship includes a mapping relationship between identification information of the contributing node and a physical address that is of a memory resource provided by the contributing node and is on the requesting node, and the second mapping relationship includes a mapping relationship between the identification information of the requesting node and a physical address that is of the memory resource provided by the contributing node and is on the contributing node.

According to a tenth aspect, an embodiment of the present invention provides a memory access system, applied to a cloud computing network, where the memory access system includes the cloud control device on the side of a requesting node according to either the fourth aspect or the seventh aspect, the cloud control device on the side of a contributing node according to either the fifth aspect or the eighth aspect, and the global resource manager according to either the sixth aspect or the ninth aspect.

According to the memory access method, device, and system provided in the embodiments of the present invention, a global resource manager allocates a memory resource of a contributing node to a requesting node, which avoids a case in which multiple nodes frequently use a same memory resource, and reduces operation and maintenance overheads of a system. In addition, the memory resource of the contributing node is requested by the requesting node according to a size of a memory resource required by the requesting node; therefore, flexible scheduling of memory resources is also implemented.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic diagram of a DSM system in the prior art;
FIG. 2A and FIG. 2B are a flowchart of a memory access method on a cloud computing network according to an embodiment of the present invention;
FIG. 3 is a schematic diagram of an application scenario according to an embodiment of the present invention;
FIG. 4 is a schematic diagram of an updated application scenario according to an embodiment of the present invention;
FIG. 5A and FIG. 5B are a flowchart of a memory read access method on a cloud computing network according to an embodiment of the present invention;
FIG. 6 is a flowchart of a memory write access method on a cloud computing network according to an embodiment of the present invention;
FIG. 7 is an apparatus diagram of a cloud control device applied to a requesting node according to an embodiment of the present invention;
FIG. 8 is an apparatus diagram of a memory cloud controller according to an embodiment of the present invention;
FIG. 9 is an apparatus diagram of a cloud control device applied to a contributing node according to an embodiment of the present invention;
FIG. 10 is an apparatus diagram of another memory cloud controller according to an embodiment of the present invention;
FIG. 11 is an apparatus diagram of a global resource manager according to an embodiment of the present invention;
FIG. 12 is a schematic structural diagram of a cloud control device applied to a requesting node according to an embodiment of the present invention;
FIG. 13 is a schematic structural diagram of a cloud control device applied to a contributing node according to an embodiment of the present invention;
FIG. 14 is a schematic structural diagram of a global resource manager according to an embodiment of the present invention; and
FIG. 15 is a schematic diagram of a memory access system according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

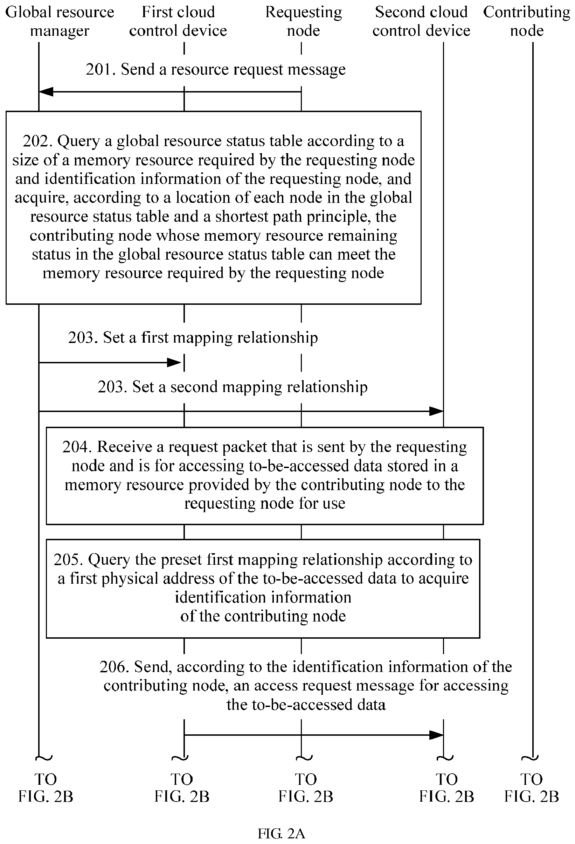

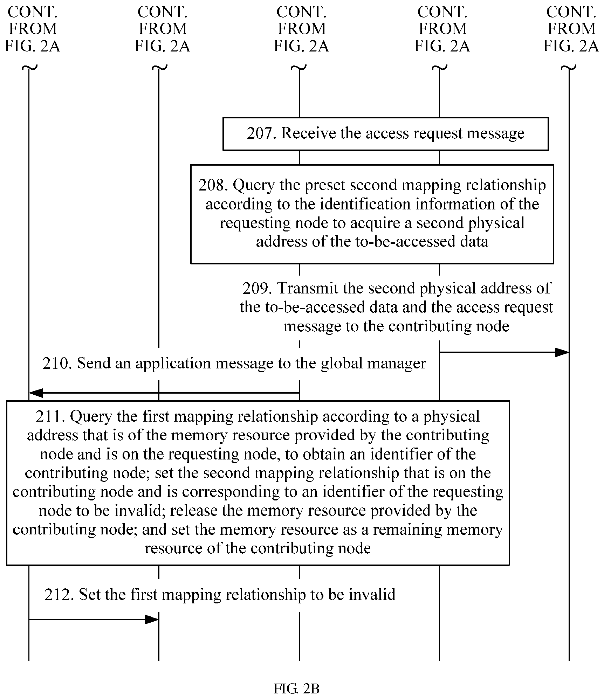

Referring to FIG. 2A and FIG. 2B, FIG. 2A and FIG. 2B are a memory access method according to an embodiment of the present invention. The method includes the following steps:
201. A requesting node sends a resource request message to a global resource manager.

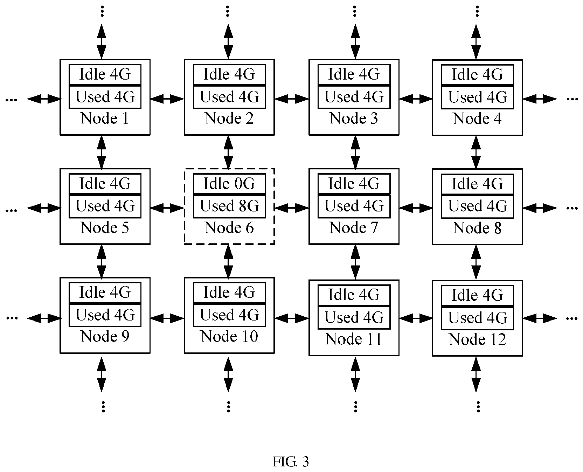

Exemplarily, a scenario applied in this embodiment is shown in a node topology diagram of a cloud computing network shown in FIG. 3, which, however, does not represent that this embodiment of the present invention is limited only to the foregoing scenario. The global resource manager may be implemented by using a node in a node topology of the cloud computing network shown in FIG. 3, or may be implemented by some distributed nodes, which is not specifically limited in this embodiment of the present invention.

Exemplarily, the resource request message includes identification information of the requesting node, a size of a memory resource required by the requesting node, and a physical address of the memory resource on the requesting node. Specifically, in this embodiment of the present invention, to clearly describe the technical solutions provided in this embodiment, it is assumed that node 6 is the requesting node, a size of a memory resource requested by node 6 is 3GB, and a physical address of the memory resource on node 6 is 0Xffff000000.

202. The global resource manager queries a global resource status table according to a size of a memory resource required by the requesting node and identification information of the requesting node, and acquires, according to a location of each node in the global resource status table and a shortest path principle, a contributing node whose memory resource remaining status in the global resource status table can meet the memory resource required by the requesting node.

Exemplarily, the global resource manager may obtain the global resource status table in advance, where the global resource status table includes identification information, the location, and a memory resource remaining status of each node, and the memory resource remaining status of each node may include a size of a currently idle memory resource (denoted as "idle" in FIG. 3) that can be provided on each node and a physical address of the memory resource on the node where the memory resource is located, and may further include a health status of each node and a memory resource use status (denoted as "used" in FIG. 3) of each node, where the memory resource use status of each node may include a size of a memory resource contributed by each node.

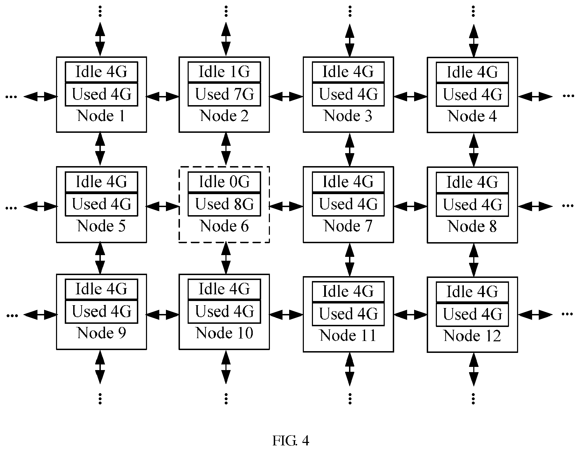

In this embodiment, because node 6 needs to request a memory resource of 3G, the global resource manager may learn, by using a location of node 6 and according to the shortest path principle, that node 2, node 5, node 7, and node 10 are nearest to node 6, and memory remaining statuses of node 2, node 5, node 7, and node 10 each may provide a memory resource of 3G. In this case, the global resource manager may further perform comparison by including health statuses of nodes, so as to select a contributing node that provides a memory resource of 3G. It is assumed, in this embodiment, that node 2 is selected as the contributing node, and it is learned that a physical address that is of a memory resource provided by node 2 and on node 2 is 0X1040000000. Subsequently, the global resource manager may further update a memory resource remaining status of node 2 in the global resource status table to 1G, and update a use status of node 2 in the global resource status table to 7G, as shown in FIG. 4.

203. The global resource manager sets a first mapping relationship applied to a cloud control device on the side of the requesting node, and sets a second mapping relationship applied to a cloud control device on the side of the contributing node.

Exemplarily, the first mapping relationship includes a mapping relationship between identification information of the contributing node and a physical address that is of a memory resource provided by the contributing node and is on the requesting node, and the second mapping relationship includes a mapping relationship between the identification information of the requesting node and a physical address that is of the memory resource provided by the contributing node and is on the contributing node.

Specifically, in this embodiment, the first mapping relationship may be described in a form of a mapping table shown in Table 1, where the physical address that is of the memory resource provided by the contributing node and is on the requesting node, an identifier of the contributing node, a validity status of the memory resource ("1" indicates valid, and "0" indicates invalid), and a size of the memory resource may be included.

**Table 1**

| Physical address of a requesting node | Identifier of a contributing node | Status | Size |
|---|---|---|---|
| 0Xffff000000 | Node 2 | 1 | 3GB |

Accordingly, the second mapping relationship may also be described by using a mapping relationship shown in Table 2, where an identifier of the requesting node, the physical address that is of the memory resource provided by the contributing node and is on the contributing node, the validity status of the memory resource ("1" indicates valid, and "0" indicates invalid), and the size of the memory resource may be included.

**Table 2**

| Identifier of a requesting node | Physical address on a contributing node | Status | Size |
|---|---|---|---|
| 0X1040000000 | Node 6 | 1 | 3GB |

It may be understood that on the one hand, for one requesting node, there may be more than one contributing node that provides a memory resource, and on the other hand, for one contributing node, the contributing node may also provide memory resources for more than one requesting node. Therefore, there may be more than one first mapping relationship on a requesting node, and there may also be more than one second mapping relationship on a contributing node.

In step 201 to step 203, with the global resource manager, the memory resource of the contributing node is allocated to the requesting node for exclusive use, and after the allocation is completed, the requesting node can access the memory resource provided by the contributing node. For clear description, in this embodiment of the present invention, the cloud control device on the side of the requesting node may be referred to as a first cloud control device, and the cloud control device on the side of the contributing node may be referred to as a second cloud control device. A specific access process is implemented, as described in step 204 to step 209.

204. A first cloud control device receives a request packet that is sent by the requesting node and is for accessing to-be-accessed data stored in the memory resource provided by the contributing node to the requesting node for use.

Exemplarily, the first cloud control device is applied to the side of the requesting node, and may be connected to the requesting node by using a bus, or may be directly used as an apparatus that is on the requesting node and is included in the requesting node, which is not limited in this embodiment of the present invention.

Exemplarily, the request packet includes the identification information of the requesting node and a first physical address of the to-be-accessed data, and the first physical address of the to-be-accessed data is a physical address of the to-be-accessed data, on the requesting node.

205. The first cloud control device queries the preset first mapping relationship according to a first physical address of the to-be-accessed data to acquire identification information of the contributing node.

Exemplarily, the first mapping relationship includes the mapping relationship between the identification information of the contributing node and the physical address that is of the memory resource provided by the contributing node and is on the requesting node.

206. The first cloud control device sends an access request message for accessing the to-be-accessed data to a second cloud control device on the side of the contributing node according to the identification information of the contributing node.

Exemplarily, the access request message may include the identification information of the requesting node.

207. The second cloud control device receives the access request message sent by the first cloud control device.

Exemplarily, the second cloud control device is applied to the side of the contributing node, and may be connected to the contributing node by using a bus, or may be directly used as an apparatus that is on the contributing node and is included in the contributing node, which is not limited in this embodiment of the present invention.

208. The second cloud control device queries the preset second mapping relationship according to the identification information of the requesting node to acquire a second physical address of the to-be-accessed data.

Exemplarily, the second physical address of the to-be-accessed data is a physical address of the to-be-accessed data, on the contributing node, and the second mapping relationship includes the mapping relationship between the identification information of the requesting node and the physical address that is of the memory resource provided by the contributing node and is on the contributing node.

209. The second cloud control device transmits the second physical address of the to-be-accessed data and the access request message to the contributing node, so that the contributing node completes an access operation on the to-be-accessed data at the second physical address of the to-be-accessed data according to the access request message.

Exemplarily, after the requesting node uses up the memory resource provided by the contributing node, the method may further include the following steps:
210. The requesting node sends an application message to the global manager.

Exemplarily, the application message includes the identification information of the requesting node and the physical address that is of the memory resource provided by the contributing node and is on the requesting node.

211. The global resource manager queries the first mapping relationship according to a physical address that is of the memory resource provided by the contributing node and is on the requesting node, to obtain an identifier of the contributing node, sets the second mapping relationship that is on the contributing node and is corresponding to an identifier of the requesting node to be invalid, releases the memory resource provided by the contributing node, and sets the memory resource as a remaining memory resource of the contributing node.

Exemplarily, in this embodiment, the global resource manager acquires, by querying the first mapping relationship shown in Table 1 on the requesting node (node 6) for a physical address that is of the memory resource provided by the contributing node and on node 6, the identifier (node 2) of the contributing node that provides the memory resource. In addition, the global resource manager queries the second mapping relationship shown in Table 2 on node 2 for the identification information (node 6) of the requesting node, to obtain the physical address 0X1040000000 of the memory resource provided by node 2 to node 6.

Then, the global resource manager sets the second mapping relationship that is on node 2 and related to node 6 to be invalid, releases, according to the physical address 0X1040000000 of the memory resource provided by node 2 to node 6, the memory resource provided by node 2 to node 6, and sets the memory resource as a remaining memory resource of node 2.

212. The global resource manager sets the first mapping relationship on the side of the requesting node to be invalid.

Exemplarily, in this embodiment, the global resource manager may further set the first mapping relationship that is on node 6 and related to node 2 to be invalid.

According to the memory access method provided in this embodiment of the present invention, a global resource manager allocates a memory resource of a contributing node to a requesting node, which avoids a case in which multiple nodes frequently use a same memory resource, and reduces operation and maintenance overheads of a system. In addition, the memory resource of the contributing node is requested by the requesting node according to a size of a memory resource required by the requesting node; therefore, flexible scheduling of memory resources is also implemented.

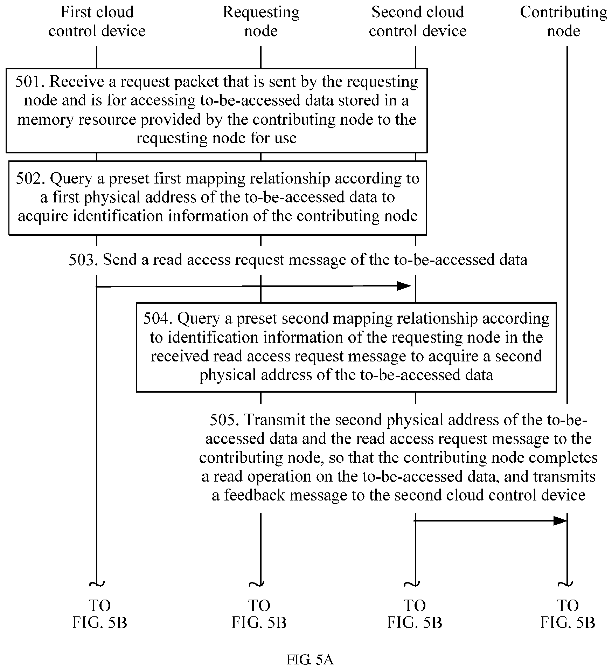

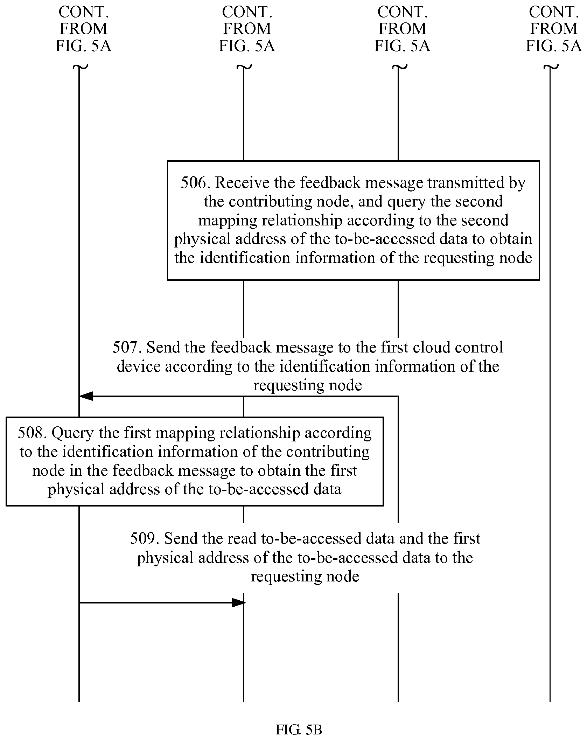

Based on the embodiment in FIG. 2A and FIG. 2B, referring to FIG. 5A and FIG. 5B, after the global resource manager allocates, in step 201 to step 203, the memory resource of the contributing node to the requesting node for exclusive use, the requesting node may perform read access to the memory resource provided by the contributing node. For clear description, in this embodiment of the present invention, the cloud control device on the side of the requesting node may be referred to as a first cloud control device, and the cloud control device on the side of the contributing node may be referred to as a second cloud control device. A detailed embodiment of the memory read access method may include the following steps:
501. The first cloud control device receives a request packet that is sent by the requesting node and is for accessing to-be-accessed data stored in a memory resource provided by the contributing node to the requesting node for use.

Exemplarily, the request packet may include a read access request packet, where the read request packet may include identification information of the requesting node and a first physical address of the to-be-accessed data.

Specifically, in this embodiment of the present invention, the read request packet may include identification information of node 6 and the first physical address of the to-be-accessed data, that is, a physical address of the to-be-accessed data on node 6. For clear description, the to-be-accessed data is 512MB, and the first physical address is 0Xffff000000.

502. The first cloud control device queries a preset first mapping relationship according to a first physical address of the to-be-accessed data to acquire identification information of the contributing node.

Exemplarily, the first mapping relationship may be shown in Table 1. In this embodiment, after the first mapping relationship is queried by using the first physical address, it may be obtained that the identification information of the contributing node that provides the memory resource is node 2.

503. The first cloud control device sends a read access request message of the to-be-accessed data to the second cloud control device according to the identification information of the contributing node.

Exemplarily, in this embodiment, the first cloud control device may generate the read access request message, where the read access request message may include the identification information, that is, node 6, of the requesting node. Subsequently, the first cloud control device may send the read access request message to the second cloud control device of the corresponding contributing node (node 2) according to the identification information of the contributing node obtained in step 502.

504. The second cloud control device queries the preset second mapping relationship according to the identification information of the requesting node in the received read access request message to acquire a second physical address of the to-be-accessed data.

Exemplarily, the second physical address of the to-be-accessed data is a physical address of the to-be-accessed data, on the contributing node, and the second mapping relationship includes the mapping relationship between the identification information of the requesting node and the physical address that is of the memory resource provided by the contributing node and is on the contributing node.

Specifically, in this embodiment, the second mapping relationship is shown in Table 2. After querying the second mapping relationship in Table 2, the second cloud control device may obtain that second physical address information of the to-be-accessed data is 0X1040000000.

505. The second cloud control device transmits the second physical address of the to-be-accessed data and the read access request message to the contributing node, so that the contributing node completes a read operation on the to-be-accessed data at the second physical address of the to-be-accessed data according to the read access request message, and transmits a feedback message to the second cloud control device.

Exemplarily, in this embodiment, the contributing node (node 2) may read the to-be-accessed data of 512MB at the second physical address, generate a feedback message by including the to-be-accessed data of 512MB and the identification information of the contributing node, and transmit the feedback message to the second cloud control device.

506. The second cloud control device receives the feedback message transmitted by the contributing node, and queries the second mapping relationship according to the second physical address of the to-be-accessed data to obtain the identification information of the requesting node.

Exemplarily, in this embodiment, the second cloud control device may query, according to the second physical address, the second mapping relationship shown in Table 2 to obtain the identification information (node 6) of the requesting node that expects to read the to-be-accessed data.

507. The second cloud control device sends the feedback message to the first cloud control device according to the identification information of the requesting node.

508. The first cloud control device queries the first mapping relationship according to the identification information of the contributing node in the feedback message to obtain the first physical address of the to-be-accessed data.

Exemplarily, in this embodiment, after receiving the feedback message sent by the second cloud control device, the first cloud control device queries the first mapping relationship shown in Table 1, and may obtain that the first physical address of the to-be-accessed data of 512MB on the requesting node is 0Xffff000000.

509. The first cloud control device sends the read to-be-accessed data and the first physical address of the to-be-accessed data to the requesting node, so that the requesting node completes reading the to-be-accessed data.

Exemplarily, the first cloud control device may transmit the to-be-accessed data of 512MB and the first physical address 0Xffff000000 of the to-be-accessed data to the requesting node (node 6), so that node 6 completes reading the to-be-accessed data.

Exemplarily, after using up the memory resource provided by the contributing node, the requesting node may send an application to the global resource manager, so as to release the memory resource provided by the contributing node, set the memory resource to an available state, and set the first mapping relationship on the first cloud control device and the second mapping relationship on the second cloud control device to be invalid. For a specific process, refer to step 210 to step 212, and details are not described herein again.

According to the memory access method provided in this embodiment of the present invention, a global resource manager allocates a memory resource of a contributing node to a requesting node, which avoids a case in which multiple nodes frequently use a same memory resource, and reduces operation and maintenance overheads of a system. In addition, the memory resource of the contributing node is requested by the requesting node according to a size of a memory resource required by the requesting node; therefore, flexible scheduling of memory resources is also implemented.

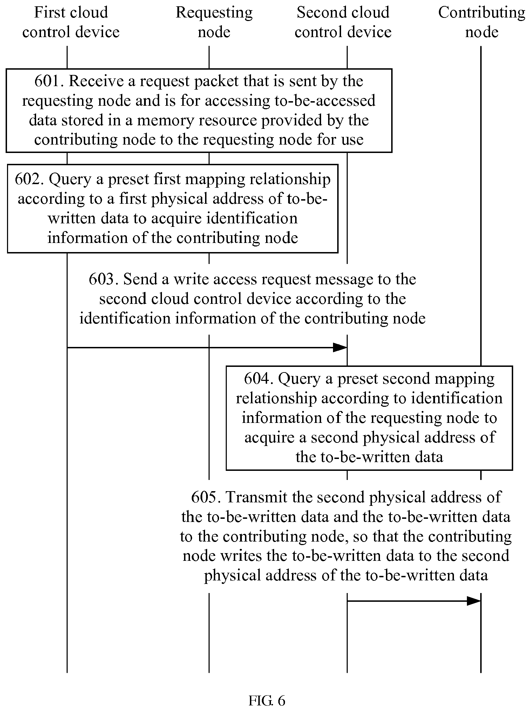

Based on the embodiment in FIG. 2A and FIG. 2B, referring to FIG. 6, after the global resource manager allocates, in step 201 to step 203, the memory resource of the contributing node to the requesting node, so that the requesting node uses the memory resource in an exclusive manner, the requesting node may further perform write access to the memory resource provided by the contributing node. For clear description, in this embodiment of the present invention, similar to the foregoing embodiment, the cloud control device on the side of the requesting node may be referred to as a first cloud control device, and the cloud control device on the side of the contributing node may be referred to as a second cloud control device. A detailed embodiment of the memory write access method may include the following steps:
601. The first cloud control device receives a request packet that is sent by the requesting node and is for accessing to-be-accessed data stored in the memory resource provided by the contributing node to the requesting node for use.
   Exemplarily, the request packet includes a write access request packet and to-be-written data, where the write access request packet includes identification information of the requesting node and a first physical address of to-be-written data.
602. The first cloud control device queries a preset first mapping relationship according to a first physical address of to-be-written data to acquire identification information of the contributing node.
603. The first cloud control device sends a write access request message to the second cloud control device according to the identification information of the contributing node.
   Exemplarily, the write access request message includes the write access request packet and the to-be-written data.
604. The second cloud control device queries a preset second mapping relationship according to the identification information of the requesting node to acquire a second physical address of the to-be-written data.
   Exemplarily, the identification information of the requesting node is included in the write access request message.
605. The second cloud control device transmits the second physical address of the to-be-written data and the to-be-written data to the contributing node, so that the contributing node writes the to-be-written data to the second physical address of the to-be-written data.

Exemplarily, similar to the foregoing embodiment, after using up the memory resource provided by the contributing node, the requesting node may send an application to the global resource manager, so as to release the memory resource provided by the contributing node, set the memory resource to an available state, and set the first mapping relationship on the first cloud control device and the second mapping relationship on the second cloud control device to be invalid. For a specific process, refer to step 210 to step 212, and details are not described herein again. According to the memory access method provided in this embodiment of the present invention, a global resource manager allocates a memory resource of a contributing node to a requesting node, which avoids a case in which multiple nodes frequently use a same memory resource, and reduces operation and maintenance overheads of a system. In addition, the memory resource of the contributing node is requested by the requesting node according to a size of a memory resource required by the requesting node; therefore, flexible scheduling of memory resources is also implemented.

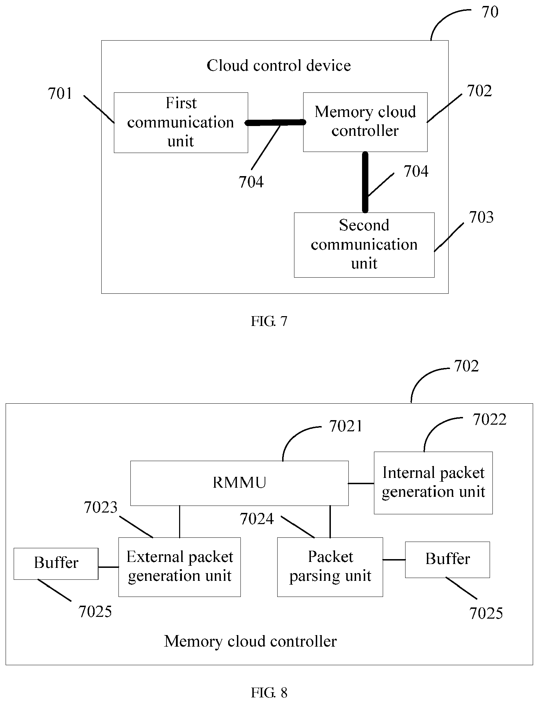

Referring to FIG. 7, FIG. 7 is a cloud control device 70 applied to a requesting node according to an embodiment of the present invention. The cloud control device 70 includes: a first communication unit 701, configured to implement, by using an on-chip switching network, communication between the cloud control device 70 and the requesting node to which the cloud control device 70 is applied, a memory cloud controller 702, a second communication unit 703, configured to implement, by using a customized hardware communication protocol between nodes, communication with a cloud control device on another node, and a communications bus 704, configured to implement connection and mutual communication between these apparatuses, where:
the communications bus 704 may be an Industry Standard Architecture (Industry Standard Architecture, ISA for short) Bus, a Peripheral Component Interconnect (Peripheral Component Interconnect, PCI for short) bus, an Extended Industry Standard Architecture (Extended Industry Standard Architecture, EISA for short) bus, or the like.

The bus 704 may be an address bus, a data bus, a control bus, or the like by category. For ease of denotation, the bus 704 is indicated by using only one bold line in FIG. 7, which, however, does not indicate that there is only one bus or only one type of bus.

The first communication unit 701 may be an I/O interface, such as a Peripheral Component Interconnect Express (Peripheral Component Express, PCIe for short) bus interface or a customized system interconnection interface, which is not limited in this embodiment of the present invention.

The second communication unit 703 may be a proprietarily designed communications interface, communicate with another node by using a customized protocol, and efficiently connect to various server resources, thereby reducing a network communication delay, which is not limited in this embodiment of the present invention.

As shown in FIG. 8, the memory cloud controller 702 may include a memory that exhibits a logical function - a remote memory management unit (Remote Memory Management Unit, RMMU for short) 7021, an internal packet generation unit (Packet generator-intra) 7022, configured to generate a packet used for communication between the cloud control device 70 and the requesting node to which the cloud control device 70 is applied, an external packet generation unit (Packet generator-inter) 7023, configured to generate a packet used for communication between the cloud control device 70 and a cloud control device on another node, a packet parsing unit (Packet disassembler) 7024, and various buffers (buffer) 7025.

The first communication unit 701 is configured to receive a request packet that is sent by the requesting node and is for accessing to-be-accessed data stored in a memory resource provided by a contributing node to the requesting node for use, where the request packet includes identification information of the requesting node and a first physical address of the to-be-accessed data, and the first physical address of the to-be-accessed data is a physical address of the to-be-accessed data, on the requesting node.

Exemplarily, a scenario to which this embodiment is applied is shown in FIG. 3. To clearly describe the technical solutions provided in this embodiment of the present invention, it is assumed that node 6 is the requesting node, a size of a memory resource requested by node 6 is 3G, and a physical address of the memory resource on node 6 is 0Xffff000000; and node 2 is the contributing node, and a physical address that is of a memory resource provided by node 2 and on node 2 is 0X1040000000.

The memory cloud controller 702 is configured to query a preset first mapping relationship according to the first physical address of the to-be-accessed data to acquire identification information of the contributing node, where the first mapping relationship includes a mapping relationship between the identification information of the contributing node and a physical address that is of the memory resource provided by the contributing node and is on the requesting node. The second communication unit 703 is configured to send an access request message for accessing the to-be-accessed data to a cloud control device on the side of the contributing node according to the identification information of the contributing node.

Exemplarily, specific access request types may include a read access request and a write access request. It may be understood that for access requests of different types, the cloud control device 70 applied to the requesting node also has corresponding processing processes.

### First aspect

The first communication unit 701 is configured to: receive the request packet that is sent by the requesting node and is for accessing the to-be-accessed data stored in the memory resource provided by the contributing node to the requesting node for use, and transmit the request packet to the memory cloud controller 702, where the request packet includes a read access request packet, and the read request packet may include the identification information of the requesting node and the first physical address of the to-be-accessed data.

Specifically, in this embodiment of the present invention, the read request packet may include identification information of node 6 and the first physical address of the to-be-accessed data, that is, a physical address of the to-be-accessed data on node 6. For clear description, the to-be-accessed data is 512MB, and the first physical address is 0Xffff000000.

The memory cloud controller 702 is configured to query the preset first mapping relationship according to the first physical address of the to-be-accessed data to acquire the identification information of the contributing node, where the first mapping relationship includes the mapping relationship between the identification information of the contributing node and the physical address that is of the memory resource provided by the contributing node and is on the requesting node.

Exemplarily, in this embodiment, the first mapping relationship may be stored in the RMMU 7021, and specifically, may be stored in a form shown in Table 1, which is not limited in the present invention. The RMMU 7021 queries the preset first mapping relationship according to the first physical address of the to-be-accessed data to acquire the identification information of the contributing node, where the identification information of the contributing node is node 2 in this embodiment. The external packet generation unit 7023 may generate a read access request message, pack the read access request message in a format for communication between nodes, and transmit the packed read access request message to the second communication unit 703 by using the buffer 7025.

Accordingly, the second communication unit 703 is configured to send the read access request message of the to-be-accessed data to the cloud control device on the side of the contributing node according to the identification information of the contributing node.

Exemplarily, in this embodiment, the second communication unit 703 may send the packed read access request message to node 2.

Exemplarily, by using step 504 to step 507, the side of the contributing node may complete the read access request and send a feedback message to the cloud control device 70, where the feedback message includes the identification information of the contributing node and the to-be-accessed data of 512MB read by the contributing node.

The second communication unit 703 is further configured to: receive the feedback message sent by the cloud control device on the side of the contributing node, and transmit the feedback message to the memory cloud controller 702.

Exemplarily, in this embodiment, the second communication unit 703 may transmit the feedback message to the buffer 7025 in the memory cloud controller 702.

The memory cloud controller 702 is further configured to query the first mapping relationship according to the identification information of the contributing node to acquire the first physical address of the to-be-accessed data.

Exemplarily, in this embodiment, after receiving the feedback message, the memory cloud controller 702 performs parsing on the feedback message in the buffer 7025 by using the packet parsing unit 7024, and transmits the parsed feedback message to the RMMU 7021.

The RMMU 7021 may obtain, by querying the first mapping relationship shown in Table 1, that the first physical address of the to-be-accessed data of 512MB on the requesting node (node 6) is 0Xffff000000. Subsequently, the RMMU 7021 transmits the to-be-accessed data of 512MB and the first physical address 0Xffff000000 of the to-be-accessed data to the internal packet generation unit 7022.

The internal packet generation unit 7022 generates the to-be-accessed data of 512MB and the first physical address 0Xffff000000 of the to-be-accessed data into a packet format that is used to communicate with the requesting node (node 6), and transmits the packet to the first communication unit 701.

The first communication unit 701 is further configured to send the to-be-accessed data read by the contributing node and the first physical address of the to-be-accessed data to the requesting node, so that the requesting node completes reading the to-be-accessed data.

### Second aspect

The first communication unit 701 is configured to receive the request packet that is sent by the requesting node and is for accessing the to-be-accessed data stored in the memory resource provided by the contributing node to the requesting node for use, where the request packet includes a write access request packet and to-be-written data, and the write access request packet includes the identification information of the requesting node and a first physical address of the to-be-written data.

Exemplarily, in this embodiment, after receiving the request packet, the first communication unit may transmit the request packet to the memory cloud controller 702 by using a network on chip. Accordingly, the memory cloud controller 702 is configured to query the preset first mapping relationship according to the first physical address of the to-be-written data to acquire the identification information of the contributing node.

Exemplarily, similar to the foregoing first aspect, the first mapping relationship may be saved in the RMMU 7021, and specifically, may be saved in a form shown in Table 1, which is not limited in the present invention. The RMMU 7021 queries the preset first mapping relationship according to the first physical address of the to-be-written data to acquire the identification information of the contributing node, where the identification information of the contributing node is node 2 in this embodiment. The external packet generation unit 7023 may pack the write access request packet and the to-be-written data in a format for communication between nodes, and transmit a packet obtained by packing to the second communication unit 703 by using the buffer 7025.

The second communication unit 703 is configured to send a write access request message to the cloud control device on the side of the contributing node according to the identification information of the contributing node, where the write access request message includes the write access request packet and the to-be-written data.

This embodiment of the present invention provides the cloud control device 70 for memory access. A global resource manager allocates a memory resource of a contributing node to a requesting node, which avoids a case in which multiple nodes frequently use a same memory resource, and reduces operation and maintenance overheads of a system. In addition, the memory resource of the contributing node is requested by the requesting node 70 according to a size of a memory resource required by the requesting node 70; therefore, flexible scheduling of memory resources is also implemented.

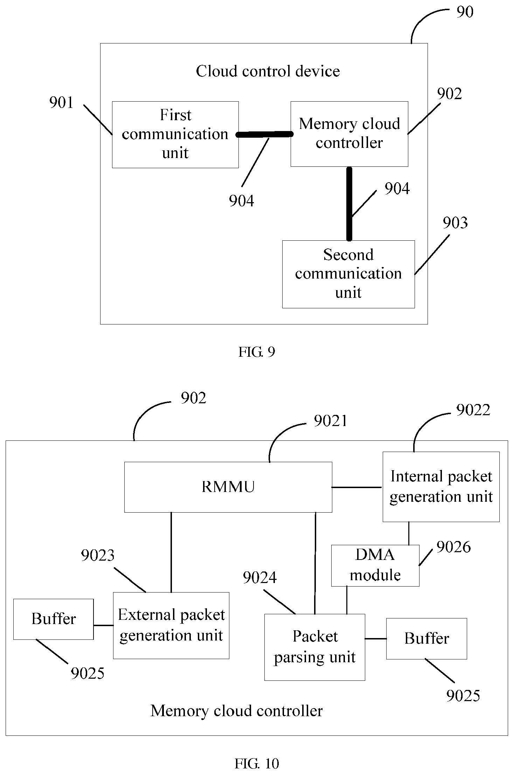

Referring to FIG. 9, FIG. 9 is a cloud control device 90 applied to a contributing node according to an embodiment of the present invention. The cloud control device 90 includes a first communication unit 901, configured to implement, by using an on-chip switching network, communication between the cloud control device 90 and the contributing node to which the cloud control device 90 is applied, a memory cloud controller 902, a second communication unit 903, configured to implement, by using a customized hardware communication protocol between nodes, communication with a cloud control device on another node, and a communications bus 904, configured to implement connection and mutual communication between these apparatuses, where:
the communications bus 904 may be an Industry Standard Architecture (Industry Standard Architecture, ISA for short) Bus, a Peripheral Component Interconnect (Peripheral Component, PCI for short) bus, an Extended Industry Standard Architecture (Extended Industry Standard Architecture, EISA for short) bus, or the like.

The bus 904 may be an address bus, a data bus, a control bus, or the like by category. For ease of denotation, the bus 904 is indicated by using only one bold line in FIG. 9, which, however, does not indicate that there is only one bus or only one type of bus.

The first communication unit 901 may be an I/O interface, such as a Peripheral Component Interconnect Express (Peripheral Component Express, PCIe for short) bus interface or a customized system interconnection interface, which is not limited in this embodiment of the present invention.

The second communication unit 903 may be a proprietarily designed communications interface, communicate with another node by using a customized protocol, and efficiently connect to various server resources, thereby reducing a network communication delay, which is not limited in this embodiment of the present invention.

As shown in FIG. 10, the memory cloud controller 902 may include a memory that exhibits a logical function - a remote memory management unit (Remote Memory Management Unit, RMMU for short) 9021, an internal packet generation unit (Packet generator-intra) 9022, configured to generate a packet used for communication between the cloud control device 90 and a requesting node to which the cloud control device 90 is applied, an external packet generation unit (Packet generator-inter) 9023, configured to generate a packet used for communication between the cloud control device 90 and a cloud control device on another node, an external packet parsing unit (Packet disassembler) 9024, and various buffers (buffer) 9025.

It should be noted that each node on an actual cloud computing network may be a requesting node, or may be a contributing node; therefore, a cloud control device on each node may include the apparatuses shown in FIG. 7 and FIG. 9, or each apparatus on a cloud control device can not only complete a function applied to a requesting node, but also complete a function applied to a contributing node. To clearly describe the technical solutions in this embodiment of the present invention, an apparatus included by a contributing node in this embodiment completes a function applied to the contributing node, and no limitation is imposed thereto.

The second communication unit 903 is configured to receive an access request message that is of to-be-accessed data and sent by a cloud control device on the side of a requesting node, where the access request message includes identification information of the requesting node.

Exemplarily, a scenario applied in this embodiment is shown in FIG. 3. To clearly describe the technical solutions provided in this embodiment of the present invention, it is assumed that node 6 is the requesting node, a size of a memory resource requested by node 6 is 3G, and a physical address of the memory resource on node 6 is 0Xffff000000; and node 2 is the contributing node, and a physical address that is of a memory resource provided by node 2 and on node 2 is 0X1040000000.

The memory cloud controller 902 is configured to query a preset second mapping relationship according to the identification information of the requesting node to acquire a second physical address of the to-be-accessed data, where the second physical address of the to-be-accessed data is a physical address of the to-be-accessed data, on the contributing node, and the second mapping relationship includes a mapping relationship between the identification information of the requesting node and a physical address that is of a memory resource provided by the contributing node and is on the contributing node.

The first communication unit 901 is configured to send the second physical address of the to-be-accessed data and the access request message to the contributing node.

Exemplarily, a specific type of an access request may include a read access request and a write access request. It may be understood that for access requests of different types, the cloud control device 90 applied to the requesting node also has corresponding processing processes.

### First aspect

The second communication unit 903 is configured to receive the access request message that is of the to-be-accessed data and sent by the cloud control device on the side of the requesting node, where the access request message includes a read access request message.

Exemplarily, after receiving the read access request message, the second communication unit 903 transmits the read access request message to the buffer 9025 in the memory cloud controller 902. Accordingly, the memory cloud controller 902 queries the preset second mapping relationship according to the identification information of the requesting node in the received read access request message to acquire the second physical address of the to-be-accessed data.

Exemplarily, in this embodiment, the packet parsing unit 9024 in the memory cloud controller 902 performs parsing on the read access request message in the buffer 9025, and transmits the second physical address that is of the to-be-accessed data and is obtained by parsing to the RMMU 9021, and the RMMU 9021 queries the second mapping relationship shown in Table 2, to obtain the second physical address 0X1040000000 of the to-be-accessed data.

At the same time, the packet parsing unit 9024 discovers that the read access request message is a read operation on a large volume of data, and therefore, the packet parsing unit 9024 transmits a DMA parameter to a direct data read (Direct Memory Access, DMA for short) module 9026 that is further included in the memory cloud controller 902, as shown in FIG. 10. The DMA module 9026 generates a DMA start message for starting a DMA engine on the contributing node.

The internal packet generation unit 9022 generates the second physical address of the to-be-accessed data, the DMA start message, and the read access request message into a packet format that is used to communicate with the contributing node (node 2), and transmits the packet to the first communication unit 901.

The first communication unit 901 is configured to transmit the second physical address of the to-be-accessed data and the read access request message to the contributing node.

Exemplarily, in this embodiment, the first communication unit 901 sends, to the contributing node (node 2), the packet that is generated by the internal packet generation unit 9022 and includes the second physical address of the to-be-accessed data, the DMA start message, and the read access request message, so that the contributing node completes a DMA read operation on the to-be-accessed data at the second physical address of the to-be-accessed data according to the read access request message and the DMA start message by using the DMA engine, and transmits a feedback message to a second cloud control device, where the feedback message includes identification information of the contributing node (node 2) and the to-be-accessed data read by the contributing node (node 2).

The first communication unit 901 is further configured to: receive the feedback message transmitted by the contributing node, and transmit the feedback message to the memory cloud controller 902.

The memory cloud controller 902 is further configured to query the second mapping relationship according to the second physical address of the to-be-accessed data to obtain the identification information of the requesting node.

Exemplarily, in this embodiment, the RMMU 9021 queries, according to the second physical address of the to-be-accessed data, the second mapping relationship shown in Table 2, and may obtain the identification information (node 6) of the requesting node that expects to read the to-be-accessed data.

The external packet generation unit 9023 packs the feedback message in a format for communication between nodes, and transmits the packed feedback message to the second communication unit 903 by using the buffer 9025.

The second communication unit 903 is further configured to send the feedback message to the cloud control device on the side of the requesting node according to the identification information of the requesting node.

Exemplarily, the second communication unit 903 may send, to the cloud control device on the side of the requesting node according to the identification information (node 6) of the requesting node, the feedback message packed by the external packet generation unit 9023.

### Second aspect

The second communication unit 903 is configured to receive a access request message that is of the to-be-accessed data and sent by the cloud control device on the side of the requesting node, where the access request message includes a write access request packet and to-be-written data. Exemplarily, after receiving the access request message, the second communication unit 903 transmits the access request message to the buffer 9025 in the memory cloud controller 902. Accordingly, the memory cloud controller 902 is configured to query the preset second mapping relationship according to the identification information of the requesting node to acquire a second physical address of the to-be-written data.

Exemplarily, the packet parsing unit 9024 in the memory cloud controller 902 performs parsing on the access request message in the buffer 9025, and transmits the second physical address that is of the to-be-written data and obtained by parsing to the RMMU 9021, and the RMMU 9021 queries the second mapping relationship shown in Table 2, to obtain the second physical address of the to-be-written data.

The internal packet generation unit 9022 generates the second physical address of the to-be-written data and the parsed write access request message into a packet format that is used to communicate with the contributing node (node 2), and transmits the packet to the first communication unit 901.

The first communication unit 901 is configured to send the second physical address of the to-be-written data and the to-be-written data to the contributing node, so that the contributing node writes the to-be-written data to the second physical address of the to-be-written data.

This embodiment of the present invention provides the cloud control device 90 for memory access. A global resource manager allocates a memory resource of a contributing node 90 to a requesting node, which avoids a case in which multiple nodes frequently use a same memory resource, and reduces operation and maintenance overheads of a system. In addition, the memory resource of the contributing node 90 is requested by the requesting node according to a size of a memory resource required by the requesting node; therefore, flexible scheduling of memory resources is also implemented.

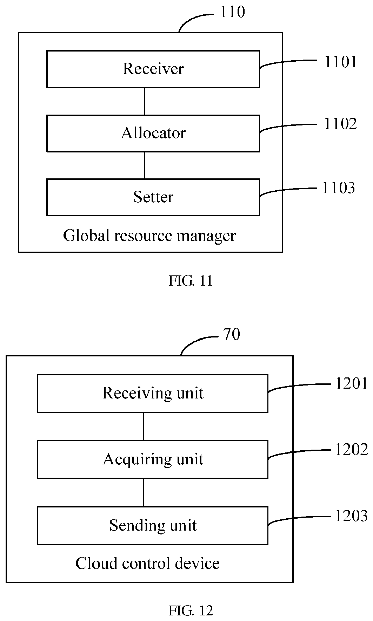

Referring to FIG. 11, FIG. 11 is a global resource manager 110 according to an embodiment of the present invention. The global resource manager 110 includesa receiver 1101, an allocator 1102, and a setter 1103.

The receiver 1101 is configured to receive a resource request message sent by a requesting node, where the resource request message includes identification information of the requesting node, a size of a memory resource required by the requesting node, and a physical address of the memory resource on the requesting node.

Exemplarily, a scenario applied in this embodiment is shown in a node topology diagram of a cloud computing network shown in FIG. 3, which, however, does not represent that this embodiment of the present invention is limited only to the foregoing scenario. The global resource manager 110 may be implemented by using a node in a node topology of the cloud computing network shown in FIG. 3, or may be implemented by some distributed nodes, which is not specifically limited in this embodiment of the present invention.

Specifically, in this embodiment of the present invention, to clearly describe the technical solutions provided in this embodiment, it is assumed that node 6 is the requesting node, a size of a memory resource requested by node 6 is 3G, and a physical address of the memory resource on node 6 is 0Xffff000000.

The allocator 1102 is configured to: query a global resource status table according to the size of the memory resource required by the requesting node and the identification information of the requesting node, and acquire, according to a location of each node in the global resource status table and a shortest path principle, a contributing node whose memory resource remaining status in the global resource status table can meet the memory resource required by the requesting node, where the global resource status table includes identification information, the location, and a memory resource remaining status that are of each node.

Exemplarily, the global resource manager 110 may obtain the global resource status table in advance, where the global resource status table includes the identification information, the location, and the memory resource remaining status of each node, and the memory resource remaining status of each node may include a size of a currently idle memory resource (denoted as "idle" in FIG. 3) that can be provided on each node and a physical address of the memory resource on the node of the memory resource, and may further include a health status of each node and a memory resource use status (denoted as "used" in FIG. 3) of each node, where the memory resource use status of each node may include a size of a memory resource contributed by each node.

In this embodiment, because node 6 needs to request a memory resource of 3G, the allocator 1102 may learn, by using a location of node 5 and according to the shortest path principle, that node 2, node 5, node 7, and node 10 are nearest to node 6, and memory remaining statuses of node 2, node 5, node 7, and node 10 each may provide a memory resource of 3GB. In this case, the allocator 1102 may further perform comparison by including health statuses of nodes, so as to select a contributing node that provides a memory resource of 3G. It is assumed, in this embodiment, that node 2 is selected as the contributing node, and it is learned that a physical address that is of a memory resource provided by node 2 and on node 2 is 0X1040000000. Subsequently, the allocator 1102 may further update a memory resource remaining status of node 2 in the global resource status table to 1G, and update a use status of node 2 in the global resource status table to 7G, as shown in FIG. 4.

The setter 1103 is configured to: set a first mapping relationship applied to a cloud control device on the side of the requesting node, and set a second mapping relationship applied to a cloud control device on the side of the contributing node, where the first mapping relationship includes a mapping relationship between identification information of the contributing node and a physical address that is of a memory resource provided by the contributing node and is on the requesting node, and the second mapping relationship includes a mapping relationship between the identification information of the requesting node and a physical address that is of the memory resource provided by the contributing node and is on the contributing node.

Exemplarily, the first mapping relationship and the second mapping relationship may be described respectively by using the mapping relationships shown in Table 1 and Table 2. It may be understood that on the one hand, for one requesting node, there may be more than one contributing node that provides a memory resource, and on the other hand, for one contributing node, the contributing node may also provide memory resources for more than one requesting node. Therefore, there may be more than one first mapping relationship on a requesting node, and there may also be more than one second mapping relationship on a contributing node.

Exemplarily, the receiver 1101 is further configured to receive an application message that is sent by the requesting node after the requesting node uses up the memory resource provided by the contributing node, where the application message includes the identification information of the requesting node and the physical address that is of the memory resource provided by the contributing node and is on the requesting node.

The setter 1102 is further configured to: query the first mapping relationship according to the physical address that is of the memory resource provided by the contributing node and is on the requesting node, to obtain an identifier of the contributing node; set the second mapping relationship that is on the cloud control device on the side of the contributing node and is corresponding to an identifier of the requesting node to be invalid; release the memory resource provided by the contributing node; and set the memory resource as a remaining memory resource of the contributing node; and
set the first mapping relationship on the cloud control device on the side of the requesting node to be invalid.

Exemplarily, in this embodiment, the setter 1102 acquires, by querying the first mapping relationship shown in Table 1 on the requesting node (node 6) for the physical address that is of the memory resource provided by the contributing node and on node 6, the identifier (node 2) of the contributing node that provides the memory resource. In addition, the setter 1102 queries the identification information (node 6) of the requesting node in the second mapping relationship shown in Table 2 on node 2, to obtain the physical address 0X1040000000 of the memory resource provided by node 2 to node 6.

Then, the setter 1102 sets the second mapping relationship that is on node 2 and related to node 6 to be invalid, releases, according to the physical address 0X1040000000 of the memory resource provided by node 2 to node 6, the memory resource provided by node 2 to node 6, and sets the memory resource as a remaining memory resource of node 2; and
sets the first mapping relationship that is on node 6 and related to node 2 to be invalid. This embodiment of the present invention provides the global resource manager 110 for memory access. The global resource manager 110 allocates a memory resource of a contributing node to a requesting node, which avoids a case in which multiple nodes frequently use a same memory resource, and reduces operation and maintenance overheads of a system. In addition, the memory resource of the contributing node is requested by the requesting node according to a size of a memory resource required by the requesting node; therefore, flexible scheduling of memory resources is also implemented.

Referring to FIG. 12, FIG. 12 is a cloud control device 70 applied to a requesting node according to an embodiment of the present invention. The cloud control device 70 includes:
a receiving unit 1201, configured to receive a request packet that is sent by the requesting node and is for accessing to-be-accessed data stored in a memory resource provided by a contributing node to the requesting node for use, where the request packet includes identification information of the requesting node and a first physical address of the to-be-accessed data, and the first physical address of the to-be-accessed data is a physical address of the to-be-accessed data, on the requesting node;
an acquiring unit 1202, configured to query a preset first mapping relationship according to the first physical address of the to-be-accessed data to acquire identification information of the contributing node, where the first mapping relationship includes a mapping relationship between the identification information of the contributing node and a physical address that is of the memory resource provided by the contributing node and is on the requesting node; and
a sending unit 1203, configured to send an access request message for accessing the to-be-accessed data to a cloud control device on the side of the contributing node according to the identification information of the contributing node.

Exemplarily, the receiving unit 1201 is configured to receive the request packet that is sent by the requesting node and is for accessing the to-be-accessed data stored in the memory resource provided by the contributing node to the requesting node for use, where the request packet includes a read access request packet.

Accordingly, the sending unit 1203 is configured to send a read access request message of the to-be-accessed data to the cloud control device on the side of the contributing node according to the identification information of the contributing node.

Further, the receiving unit 1201 is further configured to receive a feedback message sent by the cloud control device on the side of the contributing node, where the feedback message includes the identification information of the contributing node and the to-be-accessed data read by the contributing node.

The acquiring unit 1202 is further configured to query the first mapping relationship according to the identification information of the contributing node to acquire the first physical address of the to-be-accessed data.

The sending unit 1203 is further configured to send the to-be-accessed data read by the contributing node and the first physical address of the to-be-accessed data to the requesting node, so that the requesting node completes reading the to-be-accessed data.

Exemplarily, the receiving unit 1201 is configured to receive the request packet that is sent by the requesting node and is for accessing the to-be-accessed data stored in the memory resource provided by the contributing node to the requesting node for use, where the request packet includes a write access request packet and to-be-written data, and the write access request packet includes the identification information of the requesting node and a first physical address of the to-be-written data.

Accordingly, the acquiring unit 1202 is configured to query the preset first mapping relationship according to the first physical address of the to-be-written data to acquire the identification information of the contributing node.

The sending unit 1203 is configured to send a write access request message to the cloud control device on the side of the contributing node according to the identification information of the contributing node, where the write access request message includes the write access request packet and the to-be-written data.

This embodiment of the present invention provides the cloud control device 70 for memory access. A global resource manager allocates a memory resource of a contributing node to a requesting node 70, which avoids a case in which multiple nodes frequently use a same memory resource, and reduces operation and maintenance overheads of a system. In addition, the memory resource of the contributing node is requested by the requesting node 70 according to a size of a memory resource required by the requesting node 70; therefore, flexible scheduling of memory resources is also implemented.

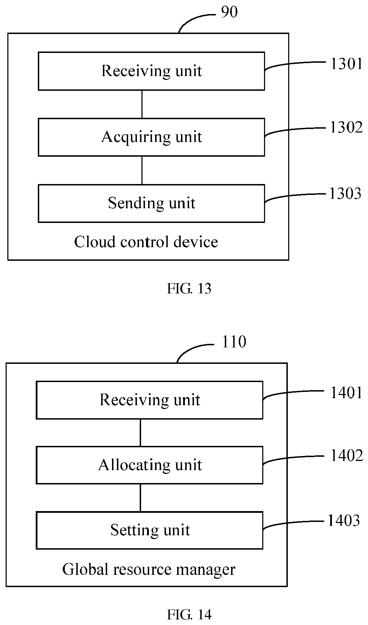

Referring to FIG. 13, FIG. 13 is a cloud control device 90 applied to a contributing node according to an embodiment of the present invention. The cloud control device 90 includes:
a receiving unit 1301, configured to receive an access request message that is of to-be-accessed data and sent by a cloud control device on the side of a requesting node, where the access request message includes identification information of the requesting node;
an acquiring unit 1302, configured to query a preset second mapping relationship according to the identification information of the requesting node to acquire a second physical address of the to-be-accessed data, where the second physical address of the to-be-accessed data is a physical address of the to-be-accessed data, on the contributing node, and the second mapping relationship includes a mapping relationship between the identification information of the requesting node and a physical address that is of a memory resource provided by the contributing node and is on the contributing node; and
a sending unit 1303, configured to send the second physical address of the to-be-accessed data and the access request message to the contributing node.

It should be noted that each node on an actual cloud computing network may be a requesting node, or may be a contributing node; therefore, a cloud control device on each node may include the apparatuses shown in FIG. 12 and FIG. 13, or each apparatus on a cloud control device can not only complete a function applied to a requesting node, but also complete a function applied to a contributing node. To clearly describe the technical solutions in this embodiment of the present invention, an apparatus included by a contributing node in this embodiment completes a function applied to the contributing node, and no limitation is imposed thereto.

Exemplarily, the receiving unit 1301 is configured to receive the access request message that is of the to-be-accessed data and sent by the cloud control device on the side of the requesting node, where the access request message includes a read access request message.

Accordingly, the sending unit 1303 is configured to transmit the second physical address of the to-be-accessed data and the read access request message to the contributing node.

According to a second possible implementation manner, with reference to a first possible implementation manner, the receiving unit 1301 is further configured to receive a feedback message transmitted by the contributing node, where the feedback message includes identification information of the contributing node and the to-be-accessed data read by the contributing node. The acquiring unit 1302 is further configured to query the second mapping relationship according to the second physical address of the to-be-accessed data to obtain the identification information of the requesting node.

The sending unit 1303 is further configured to send the feedback message to the cloud control device on the side of the requesting node according to the identification information of the requesting node.

According to a third possible implementation manner, with reference to an eighth aspect, the receiving unit 1301 is configured to receive the access request message that is of the to-be-accessed data and sent by the cloud control device on the side of the requesting node, where the access request message includes a write access request packet and to-be-written data. Accordingly, the acquiring unit 1302 is configured to query the preset second mapping relationship according to the identification information of the requesting node to acquire a second physical address of the to-be-written data.

The sending unit 1303 is configured to send the second physical address of the to-be-written data and the to-be-written data to the contributing node, so that the contributing node writes the to-be-written data to the second physical address of the to-be-written data.

This embodiment of the present invention provides the cloud control device 90 for memory access. A global resource manager allocates a memory resource of a contributing node 90 to a requesting node, which avoids a case in which multiple nodes frequently use a same memory resource, and reduces operation and maintenance overheads of a system. In addition, the memory resource of the contributing node 90 is requested by the requesting node according to a size of a memory resource required by the requesting node; therefore, flexible scheduling of memory resources is also implemented.

Referring to FIG. 14, FIG. 14 is a global resource manager 110 according to an embodiment of the present invention. The global resource manager 110 includes:
a receiving unit 1401, configured to receive a resource request message sent by a requesting node, where the resource request message includes identification information of the requesting node, a size of a memory resource required by the requesting node, and a physical address of the memory resource on the requesting node;
an acquiring unit 1402, configured to: query a global resource status table according to the size of the memory resource required by the requesting node and the identification information of the requesting node, and acquire, according to a location of each node in the global resource status table and a shortest path principle, a contributing node whose memory resource remaining status in the global resource status table can meet the memory resource required by the requesting node, where the global resource status table includes identification information, the location, and a memory resource remaining status that are of each node; and
a setting unit 1403, configured to: set a first mapping relationship applied to a cloud control device on the side of the requesting node, and set a second mapping relationship applied to a cloud control device on the side of the contributing node, where the first mapping relationship includes a mapping relationship between identification information of the contributing node and a physical address that is of a memory resource provided by the contributing node and is on the requesting node, and the second mapping relationship includes a mapping relationship between the identification information of the requesting node and a physical address that is of the memory resource provided by the contributing node and is on the contributing node.

Exemplarily, the receiving unit 1401 is further configured to receive an application message that is sent by the requesting node after the requesting node uses up the memory resource provided by the contributing node, where the application message includes the identification information of the requesting node and the physical address that is of the memory resource provided by the contributing node and is on the requesting node.

The setting unit 1403 is further configured to: query the first mapping relationship according to the physical address that is of the memory resource provided by the contributing node and is on the requesting node, to obtain an identifier of the contributing node; set the second mapping relationship that is on the cloud control device on the side of the contributing node and is corresponding to an identifier of the requesting node to be invalid; release the memory resource provided by the contributing node; and set the memory resource as a remaining memory resource of the contributing node; and
set the first mapping relationship on the cloud control device on the side of the requesting node to be invalid.

This embodiment of the present invention provides the global resource manager 110 for memory access. The global resource manager 110 allocates a memory resource of a contributing node to a requesting node, which avoids a case in which multiple nodes frequently use a same memory resource, and reduces operation and maintenance overheads of a system. In addition, the memory resource of the contributing node is requested by the requesting node according to a size of a memory resource required by the requesting node; therefore, flexible scheduling of memory resources is also implemented.

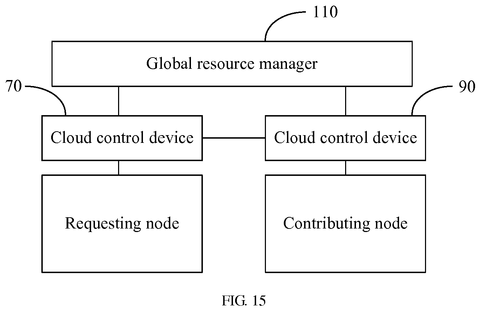

Referring to FIG. 15, FIG. 15 is a memory access system 150 according to an embodiment of the present invention. The system 150 includes at least one cloud control device 70 that is applied to a requesting node and is in any one of the foregoing embodiments, a corresponding quantity of requesting nodes, at least one cloud control device 90 that is applied to a contributing node and is in any one of the foregoing embodiments, a corresponding quantity of contributing nodes, and at least one global resource manager 110 in any one of the foregoing embodiments.

This embodiment of the present invention provides the memory access system 150. A global resource manager 110 allocates a memory resource of a contributing node 90 to a requesting node 70, which avoids a case in which multiple nodes frequently use a same memory resource, and reduces operation and maintenance overheads of a system. In addition, the memory resource of the contributing node 90 is requested by the requesting node 70 according to a size of a memory resource required by the requesting node; therefore, flexible scheduling of memory resources is also implemented.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of hardware in addition to a software functional unit.

A person of ordinary skill in the art may understand that all or some of the steps of the method embodiments may be implemented by a program instructing relevant hardware. The program may be stored in a computer-readable storage medium. When the program runs, the steps of the method embodiments are performed. The foregoing storage medium includes: any medium that can store program code, such as a ROM, a RAM, a magnetic disk, or an optical disc.

The foregoing descriptions are merely specific implementation manners of the present invention, but are not intended to limit the protection scope of the present invention.

## Claims

1. A memory access method, applied to a cloud control device on the side of a requesting node on a cloud computing network, wherein the method comprises:
receiving, by the cloud control device, a request packet that is sent by the requesting node and is for accessing to-be-accessed data stored in a memory resource provided by a contributing node to the requesting node for use, wherein the request packet comprises identification information of the requesting node and a first physical address of the to-be-accessed data, and the first physical address of the to-be-accessed data is a physical address of the to-be-accessed data, on the requesting node (step 204);
querying, by the cloud control device, a preset first mapping relationship according to the first physical address of the to-be-accessed data to acquire identification information of the contributing node, wherein the first mapping relationship comprises a mapping relationship between the identification information of the contributing node and a physical address that is of the memory resource provided by the contributing node and is on the requesting node (step 205); and
sending, by the cloud control device, an access request message for accessing the to-be-accessed data to a cloud control device on the side of the contributing node according to the identification information of the contributing node, so that the cloud control device on the side of the contributing node queries a second mapping relationship according to the identification information of the requesting node in the access request message to acquire a second physical address of the to-be-accessed data, and transmits the second physical address of the to-be-accessed data and the access request message to the contributing node, so that the contributing node completes an access operation on the to-be-accessed data at the second physical address of the to-be-accessed data according to the access request message, wherein the access request message comprises the identification information of the requesting node, the second mapping relationship comprises a mapping relationship between the identification information of the requesting node and a physical address that is of the memory resource provided by the contributing node and is on the contributing node, and the second physical address of the to-be-accessed data is a physical address of the to-be-accessed data, on the contributing node (step 206).

2. The method according to claim 1, wherein the cloud control device receives the request packet that is sent by the requesting node and is for accessing the to-be-accessed data stored in the memory resource provided by the contributing node to the requesting node for use, wherein the request packet comprises a read access request packet; and
accordingly, the sending, by the cloud control device, an access request message for accessing the to-be-accessed data to a cloud control device on the side of the contributing node according to the identification information of the contributing node, so that the cloud control device on the side of the contributing node queries a second mapping relationship according to the identification information of the requesting node in the access request message to acquire a second physical address of the to-be-accessed data, and transmits the second physical address of the to-be-accessed data and the access request message to the contributing node, so that the contributing node completes an access operation on the to-be-accessed data at the second physical address of the to-be-accessed data according to the access request message, comprises:
sending, by the cloud control device, a read access request message for accessing the to-be-accessed data to the cloud control device on the side of the contributing node according to the identification information of the contributing node, so that the cloud control device on the side of the contributing node queries the second mapping relationship according to the identification information of the requesting node in the read access request message to acquire the second physical address of the to-be-accessed data, and transmits the second physical address of the to-be-accessed data and the read access request message to the contributing node, so that the contributing node completes a read operation on the to-be-accessed data at the second physical address of the to-be-accessed data according to the access request message, and transmits a feedback message to the cloud control device on the side of the contributing node, so that the cloud control device on the side of the contributing node sends the feedback message to the cloud control device on the side of the requesting node, wherein the feedback message comprises the identification information of the contributing node and the to-be-accessed data read by the contributing node.

3. The method according to claim 2, wherein the method further comprises:
receiving, by the cloud control device, the feedback message sent by the cloud control device on the side of the contributing node;
querying, by the cloud control device, the first mapping relationship according to the identification information of the contributing node to acquire the first physical address of the to-be-accessed data; and
sending, by the cloud control device, the to-be-accessed data read by the contributing node and the first physical address of the to-be-accessed data to the requesting node, so that the requesting node completes reading the to-be-accessed data.

4. A memory access method on a cloud computing network, applied to a cloud control device on the side of a contributing node on the cloud computing network, wherein the method comprises:
receiving, by the cloud control device, an access request message that is of to-be-accessed data and sent by a cloud control device on the side of a requesting node, wherein the access request message comprises identification information of the requesting node (step 207);
querying, by the cloud control device, a preset second mapping relationship according to the identification information of the requesting node to acquire a second physical address of the to-be-accessed data, wherein the second physical address of the to-be-accessed data is a physical address of the to-be-accessed data, on the contributing node, and the second mapping relationship comprises a mapping relationship between the identification information of the requesting node and a physical address that is of a memory resource provided by the contributing node and is on the contributing node (step 208); and
transmitting, by the cloud control device, the second physical address of the to-be-accessed data and the access request message to the contributing node, so that the contributing node completes an access operation on the to-be-accessed data at the second physical address of the to-be-accessed data according to the access request message (step 209).

5. The method according to claim 4, wherein the cloud control device receives the access request message that is of the to-be-accessed data and sent by the cloud control device on the side of the requesting node, wherein the access request message comprises a read access request message; and
accordingly, the transmitting, by the cloud control device, the second physical address of the to-be-accessed data and the access request message to the contributing node, so that the contributing node completes an access operation on the to-be-accessed data at the second physical address of the to-be-accessed data according to the access request message, comprises:
transmitting, by the cloud control device, the second physical address of the to-be-accessed data and the read access request message to the contributing node, so that the contributing node completes a read operation on the to-be-accessed data at the second physical address of the to-be-accessed data according to the read access request message, and transmits a feedback message to the cloud control device, wherein the feedback message comprises identification information of the contributing node and the to-be-accessed data read by the contributing node.

6. The method according to claim 5, further comprising:
receiving, by the cloud control device, the feedback message transmitted by the contributing node, and querying the second mapping relationship according to the second physical address of the to-be-accessed data to acquire the identification information of the requesting node; and
sending, by the cloud control device, the feedback message to the cloud control device on the side of the requesting node according to the identification information of the requesting node, wherein the feedback message comprises the identification information of the contributing node and the to-be-accessed data read by the contributing node.

7. A cloud control device (70), applied to the side of a requesting node on a cloud computing network, comprising:
a first communication unit (701), configured to receive a request packet that is sent by the requesting node and is for accessing to-be-accessed data stored in a memory resource provided by a contributing node to the requesting node for use, wherein the request packet comprises identification information of the requesting node and a first physical address of the to-be-accessed data, and the first physical address of the to-be-accessed data is a physical address of the to-be-accessed data, on the requesting node;
a memory cloud controller (702), configured to query a preset first mapping relationship according to the first physical address of the to-be-accessed data to acquire identification information of the contributing node, wherein the first mapping relationship comprises a mapping relationship between the identification information of the contributing node and a physical address that is of the memory resource provided by the contributing node and is on the requesting node; and
a second communication unit (703), configured to send an access request message for accessing the to-be-accessed data to a cloud control device on the side of the contributing node according to the identification information of the contributing node.

8. The cloud control device according to claim 7, wherein the first communication unit is configured to receive the request packet that is sent by the requesting node and is for accessing the to-be-accessed data stored in the memory resource provided by the contributing node to the requesting node for use, wherein the request packet comprises a read access request packet; and
accordingly, the memory cloud controller further comprises:
a remote memory management unit RMMU, configured to query the preset first mapping relationship according to the first physical address of the to-be-accessed data to acquire the identification information of the contributing node; and
an external packet generation unit, configured to: generate a read access request message of the to-be-accessed data, and transmit the read access request for accessing the to-be-accessed data to the second communication unit; wherein
the second communication unit is configured to send the read access request message of the to-be-accessed data to the cloud control device on the side of the contributing node according to the identification information of the contributing node.

9. The cloud control device according to claim 8, wherein:
the second communication unit is further configured to receive a feedback message sent by the cloud control device on the side of the contributing node, wherein the feedback message comprises the identification information of the contributing node and the to-be-accessed data read by the contributing node; and
the memory cloud controller further comprises a packet parsing unit and an internal packet generation unit; wherein
the packet parsing unit is configured to parse the feedback message;
the RMMU is further configured to query the first mapping relationship according to the identification information of the contributing node in the parsed feedback message to acquire the first physical address of the to-be-accessed data;
the internal packet generation unit is configured to: generate, according to the to-be-accessed data that is in the parsed feedback message and read by the contributing node, and the first physical address of the to-be-accessed data, a packet that can be used to communicate with the requesting node, and transmit the packet to the first communication unit; and
the first communication unit is further configured to send the to-be-accessed data that is in the feedback message and read by the contributing node, and the first physical address of the to-be-accessed data to the requesting node, so that the requesting node completes reading the to-be-accessed data.

10. The cloud control device according to claim 7, wherein the first communication unit is configured to receive the request packet that is sent by the requesting node and is for accessing the to-be-accessed data stored in the memory resource provided by the contributing node to the requesting node for use, wherein the request packet comprises a write access request packet and to-be-written data, and the write access request packet comprises the identification information of the requesting node and a first physical address of the to-be-written data;
accordingly, an RMMU in the memory cloud controller is configured to query the preset first mapping relationship according to the first physical address of the to-be-written data to acquire the identification information of the contributing node;
an external packet generation unit packs the write access request packet and the to-be-written data into a write access request message for communication between nodes, and transmits the write access request message to the second communication unit; and
the second communication unit is configured to send the write access request message to the cloud control device on the side of the contributing node according to the identification information of the contributing node, wherein the write access request message comprises the write access request packet and the to-be-written data.

11. A cloud control device (90), applied to the side of a contributing node on a cloud computing network, comprising:
a second communication unit (903), configured to receive an access request message that is of to-be-accessed data and sent by a cloud control device on the side of a requesting node, wherein the access request message comprises identification information of the requesting node;
a memory cloud controller (902), configured to query a preset second mapping relationship according to the identification information of the requesting node to acquire a second physical address of the to-be-accessed data, wherein the second physical address of the to-be-accessed data is a physical address of the to-be-accessed data, on the contributing node, and the second mapping relationship comprises a mapping relationship between the identification information of the requesting node and a physical address that is of a memory resource provided by the contributing node and is on the contributing node; and
a first communication unit (901), configured to send the second physical address of the to-be-accessed data and the access request message to the contributing node.

12. The cloud control device according to claim 10, wherein the second communication unit is configured to receive the access request message that is of the to-be-accessed data and sent by the cloud control device on the side of the requesting node, wherein the access request message comprises a read access request message; and
accordingly, the memory cloud controller comprises:
a packet parsing unit, configured to: parse the read access request message, and transmit the parsed read access request message to a remote memory management unit RMMU;
the RMMU, configured to obtain the second physical address of the to-be-accessed data by querying the second mapping relationship; and
an internal packet generation unit, configured to transmit the second physical address of the to-be-accessed data and the read access request message to the first communication unit; wherein
the first communication unit is configured to send the second physical address of the to-be-accessed data and the read access request message to the contributing node.

13. The cloud control device according to claim 12, wherein the first communication unit is further configured to receive the feedback message transmitted by the contributing node, wherein the feedback message comprises identification information of the contributing node and the to-be-accessed data read by the contributing node;
the RMMU in the memory cloud controller is further configured to query the second mapping relationship according to the second physical address of the to-be-accessed data to obtain the identification information of the requesting node;
the memory cloud controller further comprises an external packet generation unit, configured to: pack the feedback message into a packet that can be used for communication between nodes, and transmit the packed package to the second communication unit; and
the second communication unit is further configured to send the feedback message to the cloud control device on the side of the requesting node according to the identification information of the requesting node.

14. The cloud control device according to claim 11, wherein the second communication unit is configured to receive the access request message that is of the to-be-accessed data and sent by the cloud control device on the side of the requesting node, wherein the access request message comprises a write access request packet and to-be-written data;
a packet parsing unit in the memory cloud controller is configured to: parse the access request message, and transmit information obtained by parsing to the RMMU;
the RMMU is configured to query the preset second mapping relationship according to the identification information of the requesting node to acquire the second physical address of the to-be-written data;
the internal packet generation unit is configured to: generate, according to the second physical address of the to-be-written data and the parsed access request message, a packet format that can be used to communicate with the contributing node, and transmit the packet to the first communication unit; and
the first communication unit is configured to send the second physical address of the to-be-written data and the to-be-written data in the access request to the contributing node, so that the contributing node writes the to-be-written data to the second physical address of the to-be-written data.

15. A memory access system, applied to a cloud computing network, comprising the cloud control device (70) on the side of a requesting node according to any one of claims 7 to 10, and the cloud control device (90) on the side of a contributing node according to any one of claims 11 to 14.

## Patentansprüche

1. Speicherzugriffsverfahren, angewendet auf eine Cloud-Steuereinheit auf der Seite eines anfragenden Knotens in einem Cloud-Computing-Netzwerk, wobei das Verfahren Folgendes umfasst:
Empfangen, durch die Cloud-Steuereinheit, eines Anfragepakets, das durch den anfragenden Knoten gesendet wird und für den Zugriff auf Daten bestimmt ist, auf die zugegriffen werden soll, und die in einer Speicherressource gespeichert sind, welche von einem mitwirkenden Knoten für den anfragenden Knoten zur Nutzung bereitgestellt wird, wobei das Anfragepaket Identifikationsinformationen des anfragenden Knotens und eine erste physische Adresse der Daten, auf die zugegriffen werden soll, umfasst, und die erste physische Adresse der Daten, auf die zugegriffen werden soll, eine physische Adresse der Daten, auf die zugegriffen werden soll, auf dem anfragenden Knoten ist (Schritt 204):
Abfragen, durch die Cloud-Steuereinheit, einer voreingestellten ersten Zuordnungsbeziehung entsprechend der ersten physischen Adresse der Daten, auf die zugegriffen werden soll, um Identifikationsinformationen des mitwirkenden Knotens zu erlangen, wobei die erste Zuordnungsbeziehung eine Zuordnungsbeziehung zwischen den Identifikationsinformationen des mitwirkenden Knotens und einer physischen Adresse, welche die der vom mitwirkenden Knoten bereitgestellten Speicherressource ist, umfasst, und sich auf dem anfragenden Knoten befindet (Schritt 205); und
Senden, durch die Cloud-Steuereinheit, einer Zugriffsanforderungsnachricht zum Zugriff auf die Daten, auf die zugegriffen werden soll, an eine Cloud-Steuereinheit auf der Seite des mitwirkenden Knotens entsprechend den Identifikationsinformationen des mitwirkenden Knotens, damit die Cloud-Steuereinheit auf der Seite des mitwirkenden Knotens eine zweite Zuordnungsbeziehung entsprechend den Identifikationsinformationen des anfragenden Knotens in der Zugriffsanforderungsnachricht abfragt, um eine zweite physische Adresse der Daten, auf die zugegriffen werden soll, zu erlangen, und die zweite physische Adresse der Daten, auf die zugegriffen werden soll, und die Zugriffsanforderungsnachricht an den mitwirkenden Knoten übermittelt, damit der mitwirkende Knoten eine Zugriffsoperation auf die Daten, auf die zugegriffen werden soll, an der zweiten physischen Adresse der Daten, auf die zugegriffen werden soll, entsprechend der Zugriffsanforderungsnachricht ausführt, wobei die Zugriffsanforderungsnachricht die Identifikationsinformationen des anfragenden Knotens enthält, wobei die zweite Zuordnungsbeziehung eine Zuordnungsbeziehung zwischen den Identifikationsinformationen des anfragenden Knotens und einer physischen Adresse, welche die der vom mitwirkenden Knoten bereitgestellten Speicherressource ist und sich auf dem mitwirkenden Knoten befindet, enthält, und wobei die zweite physische Adresse der Daten, auf die zugegriffen werden soll, eine physische Adresse der Daten, auf die zugegriffen werden soll, auf dem mitwirkenden Knoten ist (Schritt 206).

2. Verfahren nach Anspruch 1, wobei die Cloud-Steuereinheit das Anfragepaket empfängt, das vom anfragenden Knoten gesendet wird und für den Zugriff auf Daten bestimmt ist, auf die zugegriffen werden soll, und die in der Speicherressource gespeichert sind, welche vom mitwirkenden Knoten für den anfragenden Knoten zur Nutzung bereitgestellt wird, wobei das Anfragepaket ein Lesezugriff-Anfragepaket umfasst; und
entsprechend, das Senden, durch die Cloud-Steuereinheit, einer Zugriffsanforderungsnachricht zum Zugriff auf die Daten, auf die zugegriffen werden soll, an eine Cloud-Steuereinheit auf der Seite des mitwirkenden Knotens entsprechend den Identifikationsinformationen des mitwirkenden Knotens, damit die Cloud-Steuereinheit auf der Seite des mitwirkenden Knotens eine zweite Zuordnungsbeziehung entsprechend den Identifikationsinformationen des anfragenden Knotens in der Zugriffsanforderungsnachricht abfragt, um eine zweite physische Adresse der Daten, auf die zugegriffen werden soll, zu erlangen, und die zweite physische Adresse der Daten, auf die zugegriffen werden soll, und die Zugriffsanforderungsnachricht an den mitwirkenden Knoten übermittelt, damit der mitwirkende Knoten eine Zugriffsoperation auf die Daten, auf die zugegriffen werden soll, an der zweiten physische Adresse der Daten, auf die zugegriffen werden soll, entsprechend der Zugriffsanforderungsnachricht ausführt, Folgendes umfasst:
Senden, durch die Cloud-Steuereinheit, einer Lesezugriffsanforderungsnachricht zum Zugriff auf die Daten, auf die zugegriffen werden soll, an die Cloud-Steuereinheit auf der Seite des mitwirkenden Knotens entsprechend den Identifikationsinformationen des mitwirkenden Knotens, damit die Cloud-Steuereinheit auf der Seite des mitwirkenden Knotens die zweite Zuordnungsbeziehung entsprechend der Identifikationsinformationen des anfragenden Knotens in der Lesezugriffsanforderungsnachricht abfragt, um die zweite physische Adresse der Daten, auf die zugegriffen werden soll, zu erlangen, und die zweite physische Adresse der Daten, auf die zugegriffen werden soll, und die Lesezugriffsanforderungsnachricht an den mitwirkenden Knoten übermittelt, damit der mitwirkende Knoten eine Leseoperation auf die Daten, auf die zugegriffen werden soll, an der zweiten physische Adresse der Daten, auf die zugegriffen werden soll, entsprechend der Zugriffsanforderungsnachricht ausführt, und eine Rückmeldungsnachricht an die Cloud-Steuereinheit auf der Seite des mitwirkenden Knotens übermittelt, damit die Cloud-Steuereinheit auf der Seite des mitwirkenden Knotens die Rückmeldungsnachricht an die Cloud-Steuereinheit auf der Seite des anfragenden Knotens sendet, wobei die Rückmeldungsnachricht die Identifikationsinformationen des mitwirkenden Knotens und die durch den mitwirkenden Knoten gelesenen Daten, auf die zugegriffen werden soll, umfasst.

3. Verfahren nach Anspruch 2, wobei das Verfahren außerdem Folgendes umfasst:
Empfangen, durch die Cloud-Steuereinheit, der von der Cloud-Steuereinheit auf der Seite des mitwirkenden Knotens gesendeten Rückmeldungsnachricht;
Abfragen, durch die Cloud-Steuereinheit, der ersten Zuordnungsbeziehung entsprechend den Identifikationsinformationen des mitwirkenden Knotens, um die erste physische Adresse der Daten, auf die zugegriffen werden soll, zu erlangen; und
Senden, durch die Cloud-Steuereinheit, der durch den mitwirkenden Knoten gelesenen Daten, auf die zugegriffen werden soll, und der ersten physischen Adresse der Daten, auf die zugegriffen werden soll, an den anfragenden Knoten, damit der anfragende Knoten das Lesen der Daten, auf die zugegriffen werden soll, ausführt.

4. Speicherzugriffsverfahren in einem Cloud-Computing-Netzwerk, angewendet auf eine Cloud-Steuereinheit auf der Seite eines mitwirkenden Knotens in dem Cloud-Computing-Netzwerk, wobei das Verfahren Folgendes umfasst:
Empfangen, durch die Cloud-Steuereinheit, einer Zugriffsanforderungsnachricht, die sich auf Daten, auf die zugegriffen werden soll, bezieht und durch eine Cloud-Steuereinheit auf der Seite eines anfragenden Knoten gesendet wird, wobei die Zugriffsanforderungsnachricht Identifikationsinformationen des anfragenden Knotens enthält (Schritt 207);
Abfragen, durch die Cloud-Steuereinheit, einer voreingestellten zweiten Zuordnungsbeziehung entsprechend den Identifikationsinformationen des anfragenden Knotens, um eine zweite physische Adresse der Daten, auf die zugegriffen werden soll, zu erlangen, wobei die zweite physische Adresse der Daten, auf die zugegriffen werden soll, eine physische Adresse der Daten, auf die zugegriffen werden soll, auf dem mitwirkenden Knoten ist, und die zweite Zuordnungsbeziehung eine Zuordnungsbeziehung zwischen den Identifikationsinformationen des anfragenden Knotens und einer physischen Adresse, welche die einer vom mitwirkenden Knoten bereitgestellten Speicherressource ist und sich auf dem mitwirkenden Knoten befindet, umfasst (Schritt 208); und
Übermitteln, durch die Cloud-Steuereinheit, der zweiten physischen Adresse der Daten, auf die zugegriffen werden soll, und der Zugriffsanforderungsnachricht an den mitwirkenden Knoten, damit der mitwirkende Knoten eine Zugriffsoperation auf die Daten, auf die zugegriffen werden soll, an der zweiten physischen Adresse der Daten, auf die zugegriffen werden soll, entsprechend der Zugriffsanforderungsnachricht ausführt (Schritt 209).

5. Verfahren nach Anspruch 4, wobei die Cloud-Steuereinheit die Zugriffsanforderungsnachricht empfängt, die sich auf die Daten, auf die zugegriffen werden soll, bezieht und durch die Cloud-Steuereinheit auf der Seite des anfragenden Knotens gesendet wird, wobei die Zugriffsanforderungsnachricht eine Lesezugriffsanforderungsnachricht umfasst; und
entsprechend das Übermitteln, durch die Cloud-Steuereinheit, der zweiten physischen Adresse der Daten, auf die zugegriffen werden soll, und der Zugriffsanforderungsnachricht an den mitwirkenden Knoten, damit der mitwirkende Knoten eine Zugriffsoperation auf die Daten, auf die zugegriffen werden soll, an der zweiten physischen Adresse der Daten, auf die zugegriffen werden soll, entsprechend der Zugriffsanforderungsnachricht ausführt, Folgendes umfasst:
Übermitteln, durch die Cloud-Steuereinheit, der zweiten physischen Adresse der Daten, auf die zugegriffen werden soll, und der Lesezugriffsanforderungsnachricht an den mitwirkenden Knoten, damit der mitwirkende Knoten eine Leseoperation auf die Daten, auf die zugegriffen werden soll, an der zweiten physischen Adresse der Daten, auf die zugegriffen werden soll, entsprechend der Lesezugriffsanforderungsnachricht ausführt und eine Rückmeldungsnachricht an die Cloud-Steuereinheit übermittelt, wobei die Rückmeldungsnachricht Identifikationsinformationen des mitwirkenden Knotens und die vom mitwirkenden Knoten gelesenen Daten, auf die zugegriffen werden soll, umfasst.

6. Verfahren nach Anspruch 5, außerdem umfassend:
Empfangen, durch die Cloud-Steuereinheit, der vom mitwirkenden Knoten übermittelten Rückmeldungsnachricht, und Abfragen der zweiten Zuordnungsbeziehung entsprechend der zweiten physischen Adresse der Daten, auf die zugegriffen werden soll, um die Identifikationsinformationen des anfragenden Knotens zu erlangen; und
Senden, durch die Cloud-Steuereinheit, der Rückmeldungsnachricht an die Cloud-Steuereinheit auf der Seite des anfragenden Knotens entsprechend der Identifikationsinformationen des anfragenden Knotens, wobei die Rückmeldungsnachricht die Identifikationsinformationen des mitwirkenden Knotens und die vom mitwirkenden Knoten gelesenen Daten, auf die zugegriffen werden soll, umfasst.

7. Cloud-Steuereinheit (70), eingesetzt auf der Seite eines anfragenden Knotens in einem Cloud-Computing-Netzwerk, Folgendes umfassend:
eine erste Kommunikationseinheit (701), die dafür eingerichtet ist, ein Anfragepaket, das durch den anfragenden Knoten gesendet wird und für den Zugriff auf Daten bestimmt ist, auf die zugegriffen werden soll, und die in einer Speicherressource gespeichert sind, welche von einem mitwirkenden Knoten für den anfragenden Knoten zur Nutzung bereitgestellt wird, zu empfangen, wobei das Anfragepaket Identifikationsinformationen des anfragenden Knotens und eine erste physische Adresse der Daten, auf die zugegriffen werden soll, umfasst, und die erste physische Adresse der Daten, auf die zugegriffen werden soll, eine physische Adresse der Daten, auf die zugegriffen werden soll, auf dem anfragenden Knoten ist;
einen Cloud-Speicher-Controller (702), der dafür eingerichtet ist, eine voreingestellte erste Zuordnungsbeziehung entsprechend der ersten physischen Adresse der Daten, auf die zugegriffen werden soll, abzufragen, um Identifikationsinformationen des mitwirkenden Knotens zu erlangen, wobei die erste Zuordnungsbeziehung eine Zuordnungsbeziehung zwischen den Identifikationsinformationen des mitwirkenden Knotens und einer physischen Adresse, welche die der vom mitwirkenden Knoten bereitgestellten Speicherressource ist, umfasst, und sich auf dem anfragenden Knoten befindet; und
eine zweite Kommunikationseinheit (703), die dafür eingerichtet ist, eine Zugriffsanforderungsnachricht zum Zugriff auf die Daten, auf die zugegriffen werden soll, an eine Cloud-Steuereinheit auf der Seite des mitwirkenden Knotens entsprechend den Identifikationsinformationen des mitwirkenden Knotens zu senden.

8. Cloud-Steuereinheit nach Anspruch 7, wobei die erste Kommunikationseinheit dafür eingerichtet ist, das Anfragepaket zu empfangen, das vom anfragenden Knoten gesendet wird und für den Zugriff auf Daten bestimmt ist, auf die zugegriffen werden soll, und die in der Speicherressource gespeichert sind, welche vom mitwirkenden Knoten für den anfragenden Knoten zur Nutzung bereitgestellt wird, wobei das Anfragepaket ein Lesezugriff-Anfragepaket umfasst; und
entsprechend, der Cloud-Speicher-Controller außerdem Folgendes umfasst:
eine entfernte Speicherverwaltungseinheit (remote memory management unit, RMMU), die dafür eingerichtet ist, die voreingestellte erste Zuordnungsbeziehung entsprechend der ersten physischen Adresse der Daten, auf die zugegriffen werden soll, abzufragen, um die Identifikationsinformationen des mitwirkenden Knotens zu erlangen; und
eine externe Paketgenerierungseinheit, die für Folgendes eingerichtet ist: Generieren einer Lesezugriffsanforderungsnachricht bezüglich der Daten, auf die zugegriffen werden soll, und Übermitteln der Lesezugriffsanforderung zum Zugriff auf die Daten, auf die zugegriffen werden soll, an die zweite Kommunikationseinheit; wobei
die zweite Kommunikationseinheit dafür eingerichtet ist, die Lesezugriffsanforderungsnachricht bezüglich der Daten, auf die zugegriffen werden soll, an die Cloud-Steuereinheit auf der Seite des mitwirkenden Knotens entsprechend den Identifikationsinformationen des mitwirkenden Knotens zu senden.

9. Cloud-Steuereinheit nach Anspruch 8, wobei:
die zweite Kommunikationseinheit außerdem dafür eingerichtet ist, eine von der Cloud-Steuereinheit auf der Seite des mitwirkenden Knotens gesendete Rückmeldungsnachricht zu empfangen, wobei die Rückmeldungsnachricht die Identifikationsinformationen des mitwirkenden Knotens und die vom mitwirkender Knoten gelesenen Daten, auf die zugegriffen werden soll, umfasst; und
der Cloud-Speicher-Controller außerdem eine Paket-Parsing-Einheit (Paketanalyseeinheit) und eine interne Paketgenerierungseinheit umfasst; wobei die Paket-Parsing-Einheit dafür eingerichtet ist, die Rückmeldungsnachricht zu analysieren;
die RMMU außerdem dafür eingerichtet ist, die erste Zuordnungsbeziehung entsprechend den Identifikationsinformationen des mitwirkenden Knotens in der analysierten Rückmeldungsnachricht abzufragen, um die erste physische Adresse der Daten, auf die zugegriffen werden soll, zu erlangen;
die interne Paketgenerierungseinheit für Folgendes eingerichtet ist: Generieren eines Pakets, das zur Kommunikation mit dem anfragenden Knoten genutzt werden kann, entsprechend den Daten, auf die zugegriffen werden soll, welche sich in der analysierten Rückmeldungsnachricht befinden und vom mitwirkenden Knoten gelesen werden, und der ersten physischen Adresse der Daten, auf die zugegriffen werden soll, und Übermitteln des Pakets an die erste Kommunikationseinheit; und
die erste Kommunikationseinheit außerdem dafür eingerichtet ist, die Daten, auf die zugegriffen werden soll, welche sich in der Rückmeldungsnachricht befinden und vom mitwirkenden Knoten gelesen werden, und die erste physische Adresse der Daten, auf die zugegriffen werden soll, an den anfragenden Knoten zu senden, damit der anfragende Knoten das Lesen der Daten, auf die zugegriffen werden soll, ausführtt.

10. Cloud-Steuereinheit nach Anspruch 7, wobei die erste Kommunikationseinheit dafür eingerichtet ist, das Anfragepaket zu empfangen, das vom anfragenden Knoten gesendet wird und für den Zugriff auf Daten bestimmt ist, auf die zugegriffen werden soll, und die in der Speicherressource gespeichert sind, welche vom mitwirkenden Knoten für den anfragenden Knoten zur Nutzung bereitgestellt wird, wobei das Anfragepaket ein Schreibzugriff-Anfragepaket sowie Daten, die geschrieben werden sollen, umfasst, und wobei das Schreibzugriff-Anfragepaket die Identifikationsinformationen des anfragenden Knotens und eine erste physische Adresse der Daten, die geschrieben werden sollen, umfasst;
eine RMMU im Cloud-Speicher-Controller, dementsprechend dafür eingerichtet, die voreingestellte erste Zuordnungsbeziehung entsprechend der ersten physischen Adresse der Daten, die geschrieben werden sollen, abzufragen, um die Identifikationsinformationen des mitwirkenden Knotens zu erlangen;
wobei eine externe Paketgenerierungseinheit das Schreibzugriff-Anfragepaket und die Daten, die geschrieben werden sollen, in eine Schreibzugriffsanforderungsnachricht zur Kommunikation zwischen Knoten verpackt und die Schreibzugriffsanforderungsnachricht an die zweite Kommunikationseinheit übermittelt; und
wobei die zweite Kommunikationseinheit dafür eingerichtet ist, die Schreibzugriffsanforderungsnachricht an die Cloud-Steuereinheit auf der Seite des mitwirkenden Knotens entsprechend den Identifikationsinformationen des mitwirkenden Knotens zu senden, wobei die Schreibzugriffsanforderungsnachricht das Schreibzugriff-Anfragepaket und die Daten, die geschrieben werden sollen, umfasst.

11. Cloud-Steuereinheit (90), eingesetzt auf der Seite eines mitwirkenden Knotens in einem Cloud-Computing-Netzwerk, Folgendes umfassend:
eine zweite Kommunikationseinheit (903), die dafür eingerichtet ist, eine Zugriffsanforderungsnachricht, die sich auf Daten, auf die zugegriffen werden soll, bezieht und durch eine Cloud-Steuereinheit auf der Seite eines anfragenden Knoten gesendet wird, zu empfangen, wobei die Zugriffsanforderungsnachricht Identifikationsinformationen des anfragenden Knotens enthält;
einen Cloud-Speicher-Controller (902), der dafür eingerichtet ist, eine voreingestellte zweite Zuordnungsbeziehung entsprechend den Identifikationsinformationen des anfragenden Knotens abzufragen, um eine zweite physische Adresse der Daten, auf die zugegriffen werden soll, zu erlangen, wobei die zweite physische Adresse der Daten, auf die zugegriffen werden soll, eine physische Adresse der Daten, auf die zugegriffen werden soll, auf dem mitwirkender Knoten ist, und die zweite Zuordnungsbeziehung eine Zuordnungsbeziehung zwischen den Identifikationsinformationen des anfragenden Knotens und einer physischen Adresse, welche die einer vom mitwirkenden Knoten bereitgestellten Speicherressource ist und sich auf dem mitwirkenden Knoten befindet, umfasst; und
eine erste Kommunikationseinheit (901), die dafür eingerichtet ist, die zweite physische Adresse der Daten, auf die zugegriffen werden soll, und die Zugriffsanforderungsnachricht an den mitwirkenden Knoten zu senden.

12. Cloud-Steuereinheit nach Anspruch 10, wobei die zweite Kommunikationseinheit dafür eingerichtet ist, die Zugriffsanforderungsnachricht zu empfangen, die sich auf die Daten, auf die zugegriffen werden soll, bezieht und durch die Cloud-Steuereinheit auf der Seite des anfragenden Knotens gesendet wird, wobei die Zugriffsanforderungsnachricht eine Lesezugriffsanforderungsnachricht umfasst; und entsprechend, der Cloud-Speicher-Controller Folgendes umfasst:
eine Paket-Parsing-Einheit, die für Folgendes eingerichtet ist: Analysieren (Parsen) der Lesezugriffsanforderungsnachricht und Übermitteln der analysierten Lesezugriffsanforderungsnachricht an eine entfernte Speicherverwaltungseinheit (RMMU);
die RMMU, die dafür eingerichtet ist, die zweite physische Adresse der Daten, auf die zugegriffen werden soll, durch Abfragen der zweiten Zuordnungsbeziehung zu erlangen; und
eine interne Paketgenerierungseinheit, die dafür eingerichtet ist, die zweite physische Adresse der Daten, auf die zugegriffen werden soll, und die Zugriffsanforderungsnachricht an die erste Kommunikationseinheit zu übermitteln; wobei
die erste Kommunikationseinheit dafür eingerichtet ist, die zweite physische Adresse der Daten, auf die zugegriffen werden soll, und die Lesezugriffsanforderungsnachricht an den mitwirkenden Knoten zu senden.

13. Cloud-Steuereinheit nach Anspruch 12, wobei die erste Kommunikationseinheit außerdem dafür eingerichtet ist, die vom mitwirkenden Knoten übermittelte Rückmeldungsnachricht zu empfangen, wobei die Rückmeldungsnachricht Identifikationsinformationen des mitwirkenden Knotens und die vom mitwirkenden Knoten gelesenen Daten, auf die zugegriffen werden soll, umfasst;
wobei die RMMU im Cloud-Speicher-Controller außerdem dafür eingerichtet ist, die zweite Zuordnungsbeziehung entsprechend der zweiten physischen Adresse der Daten, auf die zugegriffen werden soll, abzufragen, um die Identifikationsinformationen des anfragenden Knotens zu erlangen;
wobei der Cloud-Speicher-Controller außerdem eine externe Paketgenerierungseinheit umfasst die für Folgendes eingerichtet ist: Verpacken der Rückmeldungsnachricht in ein Paket, das zur Kommunikation zwischen Knoten genutzt werden kann, und Übermitteln des verpackten Pakets an die zweite Kommunikationseinheit; und wobei die zweite Kommunikationseinheit außerdem dafür eingerichtet ist, die Rückmeldungsnachricht an die Cloud-Steuereinheit auf der Seite des anfragenden Knotens entsprechend den Identifikationsinformationen des anfragenden Knotens zu senden.

14. Cloud-Steuereinheit nach Anspruch 11, wobei die zweite Kommunikationseinheit dafür eingerichtet ist, die Zugriffsanforderungsnachricht zu empfangen, die sich auf die Daten, auf die zugegriffen werden soll, bezieht und durch die Cloud-Steuereinheit auf der Seite des anfragenden Knotens gesendet wird, wobei die Zugriffsanforderungsnachricht ein Schreibzugriff-Anfragepaket und Daten, die geschrieben werden sollen, umfasst;
wobei eine Paket-Parsing-Einheit im Cloud-Speicher-Controller für Folgendes eingerichtet ist: Analysieren (Parsen) der Zugriffsanforderungsnachricht und Übermitteln der durch das Analysieren erlangten Daten an die RMMU;
wobei die RMMU dafür eingerichtet ist, die voreingestellte zweite Zuordnungsbeziehung entsprechend den Identifikationsinformationen des anfragenden Knotens abzufragen, um die zweite physische Adresse der Daten, die geschrieben werden sollen, zu erlangen;
wobei die interne Paketgenerierungseinheit für Folgendes eingerichtet ist: Generieren eines Paketformats, das zur Kommunikation mit dem mitwirkenden Knoten genutzt werden kann, entsprechend der zweiten physischen Adresse der Daten, die geschrieben werden sollen, und der analysierten Zugriffsanforderungsnachricht, sowie Übermitteln des Pakets an die erste Kommunikationseinheit; und
wobei die erste Kommunikationseinheit dafür eingerichtet ist, die zweite physische Adresse der Daten, die geschrieben werden sollen, und die Daten, die geschrieben werden sollen, in der Zugriffsanforderung an den mitwirkenden Knoten zu senden, damit der mitwirkende Knoten die Daten, die geschrieben werden sollen, auf der zweiten physischen Adresse der Daten, die geschrieben werden sollen, schreibt.

15. Speicherzugriffssystem, eingesetzt in einem Cloud-Computing-Netzwerk, welches die Cloud-Steuereinheit (70) auf der Seite eines anfragenden Knotens nach einem der Ansprüche 7 bis 10 und die Cloud-Steuereinheit (90) auf der Seite eines mitwirkenden Knotens nach einem der Ansprüche 11 bis 14 umfasst.

## Revendications

1. Procédé d'accès de mémoire, appliqué sur un contrôleur en nuage sur le côté d'un noeud de demande sur un réseau informatique en nuage, dans lequel le procédé comprend :
la réception, par le contrôleur en nuage, d'un paquet de demande qui est envoyé par le noeud de demande et est pour accéder à des données, auxquelles l'accès doit être obtenu, stockées dans une ressource de mémoire fournie, par un noeud de contribution, au noeud de demande pour l'utilisation, dans lequel le paquet de demande comprend des informations d'identification du noeud de demande et une première adresse physique des données, auxquelles l'accès doit être obtenu, et la première adresse physique des données, auxquelles l'accès doit être obtenu, est une adresse physique des données, auxquelles l'accès doit être obtenu, sur le noeud de demande (étape 204) ;
l'interrogation, par le contrôleur en nuage, d'une première relation de mappage prédéfinie selon la première adresse physique des données, auxquelles l'accès doit être obtenu, pour acquérir des informations d'identification du noeud contributeur, dans lequel la première relation de mappage comprend une relation de mappage entre les informations d'identification du noeud contributeur et une adresse physique qui est de la ressource de mémoire fournie par le noeud contributeur et est sur le noeud de demande (étape 205) ; et
l'envoi, par le contrôleur en nuage, d'un message de demande d'accès pour accéder aux données, auxquelles l'accès doit être obtenu, à un contrôleur en nuage sur le côté du noeud contributeur selon les informations d'identification du noeud contributeur, pour que le contrôleur en nuage sur le côté du noeud contributeur interroge une seconde relation de mappage selon les informations d'identification du noeud de demande dans le message de demande d'accès pour acquérir une seconde adresse physique des données, auxquelles l'accès doit être obtenu, et transmette la seconde adresse physique des données, auxquelles l'accès doit être obtenu, et du message de demande d'accès au noeud contributeur, pour que le noeud contributeur achève une opération d'accès sur les données, auxquelles l'accès doit être obtenu, à la seconde adresse physique des données, auxquelles l'accès doit être obtenu, selon le message de demande d'accès, dans lequel le message de demande d'accès comprend les informations d'identification du noeud de demande, la seconde relation de mappage comprend une relation de mappage entre les informations d'identification du noeud de demande et une adresse physique qui est de la ressource de mémoire fournie par le noeud contributeur et est sur le noeud contributeur, et la seconde adresse physique des données, auxquelles l'accès doit être obtenu, est une adresse physique des données, auxquelles l'accès doit être obtenu, sur le noeud contributeur (étape 206).

2. Procédé selon la revendication 1, dans lequel le contrôleur en nuage reçoit le paquet de demande qui est envoyé par le noeud de demande et est pour accéder aux données, auxquelles l'accès doit être obtenu, stockées dans la ressource de mémoire fournie, par le noeud contributeur, au noeud de demande pour l'utilisation, dans lequel le paquet de demande comprend un paquet de demande d'accès de lecture ; et
par conséquent, l'envoi, par le contrôleur en nuage, d'un message de demande d'accès pour accéder aux données, auxquelles l'accès doit être obtenu, à un contrôleur en nuage sur le côté du noeud contributeur selon les informations d'identification du noeud contributeur, pour que le contrôleur en nuage sur le côté du noeud contributeur interroge une seconde relation de mappage selon les informations d'identification du noeud de demande dans le message de demande d'accès pour acquérir une seconde adresse physique des données, auxquelles l'accès doit être obtenu, et transmette la seconde adresse physique des données, auxquelles l'accès doit être obtenu, et le message de demande d'accès au noeud contributeur, pour que le noeud contributeur achève une opération d'accès sur les données, auxquelles l'accès doit être obtenu, à la seconde adresse physique des données, auxquelles l'accès doit être obtenu, selon le message de demande d'accès, comprend :
l'envoi, par le contrôleur en nuage, d'un message de demande d'accès de lecture pour accéder aux données, auxquelles l'accès doit être obtenu, au contrôleur en nuage sur le côté du noeud contributeur selon les informations d'identification du noeud contributeur, pour que le contrôleur en nuage sur le côté du noeud contributeur interroge la seconde relation de mappage selon les informations d'identification du noeud de demande dans le message de demande d'accès de lecture pour acquérir la seconde adresse physique des données, auxquelles l'accès doit être obtenu, et transmette la seconde adresse physique des données, auxquelles l'accès doit être obtenu, et du message de demande d'accès de lecture au noeud contributeur, pour que le noeud contributeur achève une opération de lecture sur les données, auxquelles l'accès doit être obtenu, à la seconde adresse physique des données, auxquelles l'accès doit être obtenu, selon le message de demande d'accès, et transmette un message de rétroaction au contrôleur en nuage sur le côté du noeud contributeur, pour que le contrôleur en nuage sur le côté du noeud contributeur envoie le message de rétroaction au contrôleur en nuage sur le côté du noeud de demande, dans lequel le message de rétroaction comprend les informations d'identification du noeud contributeur et les données, auxquelles l'accès doit être obtenu, lues par le noeud contributeur.

3. Procédé selon la revendication 2, dans lequel le procédé comprend en outre :
la réception, par le contrôleur en nuage, du message de rétroaction envoyé par le contrôleur en nuage sur le côté du noeud contributeur ;
l'interrogation, par le contrôleur en nuage, de la première relation de mappage selon les informations d'identification du noeud contributeur pour acquérir la première adresse physique des données, auxquelles l'accès doit être obtenu ; et
l'envoi, par le contrôleur en nuage, des données, auxquelles l'accès doit être obtenu, lues par le noeud contributeur et de la première adresse physique des données, auxquelles l'accès doit être obtenu, au noeud de demande, pour que le noeud de demande achève la lecture des données, auxquelles l'accès doit être obtenu.

4. Procédé d'accès de mémoire sur un réseau informatique en nuage, appliqué sur un contrôleur en nuage sur le côté d'un noeud contributeur sur le réseau informatique en nuage, dans lequel le procédé comprend :
la réception, par le contrôleur en nuage, d'un message de demande d'accès qui est de données, auxquelles l'accès doit être obtenu, et envoyé par un contrôleur en nuage sur le côté d'un noeud de demande, dans lequel le message de demande d'accès comprend des informations d'identification du noeud de demande (étape 207) ;
l'interrogation, par le contrôleur en nuage, d'une seconde relation de mappage prédéfinie selon les informations d'identification du noeud de demande pour acquérir une seconde adresse physique des données, auxquelles l'accès doit être obtenu, dans lequel la seconde adresse physique des données, auxquelles l'accès doit être obtenu, est une adresse physique des données, auxquelles l'accès doit être obtenu, sur le noeud contributeur, et la seconde relation de mappage comprend une relation de mappage entre les informations d'identification du noeud de demande et une adresse physique qui est d'une ressource de mémoire fournie par le noeud contributeur et est sur le noeud contributeur (étape 208) ; et
la transmission, par le contrôleur en nuage, de la seconde adresse physique des données, auxquelles l'accès doit être obtenu, et du message de demande d'accès au noeud contributeur, pour que le noeud contributeur achève une opération d'accès sur les données, auxquelles l'accès doit être obtenu, à la seconde adresse physique des données, auxquelles l'accès doit être obtenu, selon le message de demande d'accès (étape 209).

5. Procédé selon la revendication 4, dans lequel le contrôleur en nuage reçoit le message de demande d'accès qui est des données, auxquelles l'accès doit être obtenu, et envoyé par le contrôleur en nuage sur le côté du noeud de demande, dans lequel le message de demande d'accès comprend un message de demande d'accès de lecture ; et
par conséquent, la transmission, par le contrôleur en nuage, de la seconde adresse physique des données, auxquelles l'accès doit être obtenu, et du message de demande d'accès au noeud contributeur, pour que le noeud contributeur achève une opération d'accès sur les données, auxquelles l'accès doit être obtenu, à la seconde adresse physique des données, auxquelles l'accès doit être obtenu, selon le message de demande d'accès, comprend :
la transmission, par le contrôleur en nuage, de la seconde adresse physique des données, auxquelles l'accès doit être obtenu, et du message de demande d'accès de lecture au noeud contributeur, pour que le noeud contributeur achève une opération de lecture sur les données, auxquelles l'accès doit être obtenu, à la seconde adresse physique des données, auxquelles l'accès doit être obtenu, selon le message de demande d'accès de lecture, et transmette un message de rétroaction au contrôleur en nuage, dans lequel le message de rétroaction comprend des informations d'identification du noeud contributeur et les données, auxquelles l'accès doit être obtenu, lues par le noeud contributeur.

6. Procédé selon la revendication 5, comprenant en outre :
la réception, par le contrôleur en nuage, du message de rétroaction transmis par le noeud contributeur, et l'interrogation de la seconde relation de mappage selon la seconde adresse physique des données, auxquelles l'accès doit être obtenu, pour acquérir les informations d'identification du noeud de demande ; et
l'envoi, par le contrôleur en nuage, du message de rétroaction au contrôleur en nuage sur le côté du noeud de demande selon les informations d'identification du noeud de demande, dans lequel le message de rétroaction comprend les informations d'identification du noeud contributeur et les données, auxquelles l'accès doit être obtenu, lues par le noeud contributeur.

7. Contrôleur en nuage (70), appliqué sur le côté d'un noeud de demande sur un réseau informatique en nuage, comprenant :
une première unité de communication (701), configurée pour recevoir un paquet de demande qui est envoyé par le noeud de demande et est pour accéder à des données, auxquelles l'accès doit être obtenu, stockées dans une ressource de mémoire fournie, par un noeud de contribution, au noeud de demande pour l'utilisation, dans lequel le paquet de demande comprend des informations d'identification du noeud de demande et une première adresse physique des données, auxquelles l'accès doit être obtenu, et
la première adresse physique des données, auxquelles l'accès doit être obtenu, est une adresse physique des données, auxquelles l'accès doit être obtenu, sur le noeud de demande ;
un contrôleur en nuage de mémoire (702), configuré pour interroger une première relation de mappage prédéfinie selon la première adresse physique des données, auxquelles l'accès doit être obtenu, pour acquérir des informations d'identification du noeud contributeur, dans lequel la première relation de mappage comprend une relation de mappage entre les informations d'identification du noeud contributeur et une adresse physique qui est de la ressource de mémoire fournie par le noeud contributeur et est sur le noeud de demande ; et
une seconde unité de communication (703), configurée pour envoyer un message de demande d'accès pour accéder aux données, auxquelles l'accès doit être obtenu, à un contrôleur en nuage sur le côté du noeud contributeur selon les informations d'identification du noeud contributeur.

8. Contrôleur en nuage selon la revendication 7, dans lequel la première unité de communication est configurée pour recevoir le paquet de demande qui est envoyé par le noeud de demande et est pour accéder aux données, auxquelles l'accès doit être obtenu, stockées dans la ressource de mémoire fournie par le noeud contributeur au noeud de demande pour l'utilisation, dans lequel le paquet de demande comprend une paquet de demande d'accès de lecture ; et
par conséquent, le contrôleur en nuage de mémoire comprend en outre :
une unité de gestion de mémoire à distance, RMMU, configurée pour interroger la première relation de mappage prédéfinie selon la première adresse physique des données, auxquelles l'accès doit être obtenu, pour acquérir les informations d'identification du noeud contributeur ; et
une unité de génération de paquet externe, configurée pour : générer un message de demande d'accès de lecture des données, auxquelles l'accès doit être obtenu, et transmettre la demande d'accès de lecture pour accéder aux données, auxquelles l'accès doit être obtenu, à la seconde unité de communication ; dans lequel la seconde unité de communication est configurée pour envoyer le message de demande d'accès de lecture des données, auxquelles l'accès doit être obtenu, au contrôleur en nuage sur le côté du noeud contributeur selon les informations d'identification du noeud contributeur.

9. Contrôleur en nuage selon la revendication 8, dans lequel :
la seconde unité de communication est en outre configurée pour recevoir un message de rétroaction envoyé par le contrôleur en nuage sur le côté du noeud contributeur, dans lequel le message de rétroaction comprend les informations d'identification du noeud contributeur et les données, auxquelles l'accès doit être obtenu, lues par le noeud contributeur ; et
le contrôleur en nuage de mémoire comprend en outre une unité d'analyse de paquet et une unité de génération de paquet interne ; dans lequel
l'unité d'analyse de paquet est configurée pour analyser le message de rétroaction ;
la RMMU est en outre configurée pour interroger la première relation de mappage selon les informations d'identification du noeud contributeur dans le message de rétroaction analysé pour acquérir la première adresse physique des données, auxquelles l'accès doit être obtenu, ;
l'unité de génération de paquet interne est configurée pour : générer, selon les données, auxquelles l'accès doit être obtenu, qui sont dans le message de rétroaction analysé et lues par le noeud contributeur, et la première adresse physique des données, auxquelles l'accès doit être obtenu, un paquet qui peut être utilisé pour communiquer avec le noeud de demande, et transmettre le paquet à la première unité de communication ; et
la première unité de communication est en outre configurée pour envoyer les données, auxquelles l'accès doit être obtenu, qui sont dans le message de rétroaction et lues par le noeud contributeur, et la première adresse physique des données, auxquelles l'accès doit être obtenu, au noeud de demande, pour que le noeud de demande achève la lecture des données, auxquelles l'accès doit être obtenu.

10. Contrôleur en nuage selon la revendication 7, dans lequel la première unité de communication est configurée pour recevoir le paquet de demande qui est envoyé par le noeud de demande et est pour accéder aux données, auxquelles l'accès doit être obtenu, stockées dans la ressource de mémoire fournie par le noeud contributeur au noeud de demande pour l'utilisation, dans lequel le paquet de demande comprend un paquet de demande d'accès de lecture et des données destinées à être écrites, et le paquet de demande d'accès de lecture comprend les informations d'identification du noeud de demande et une première adresse physique des données destinées à être écrites ;
par conséquent, une RMMU dans le contrôleur en nuage de mémoire est configurée pour interroger la première relation de mappage prédéfinie selon la première adresse physique des données destinées à être écrites pour acquérir les informations d'identification du noeud contributeur ;
une unité de génération de paquet externe met le paquet de demande d'accès de lecture et les données destinées à être écrites dans un message de demande d'accès de lecture pour la communication entre des noeuds, et transmet le message de demande d'accès de lecture à la seconde unité de communication ; et
la seconde unité de communication est configurée pour envoyer le message de demande d'accès de lecture au contrôleur en nuage sur le côté du noeud contributeur selon les informations d'identification du noeud contributeur, dans lequel le message de demande d'accès de lecture comprend le paquet de demande d'accès de lecture et les données destinées à être écrites.

11. Contrôleur en nuage (90), appliqué sur le côté d'un noeud contributeur sur un réseau informatique en nuage, comprenant :
une seconde unité de communication (903), configurée pour recevoir un message de demande d'accès qui est de données, auxquelles l'accès doit être obtenu, et envoyé par un contrôleur en nuage sur le côté d'un noeud de demande, dans lequel le message de demande d'accès comprend des informations d'identification du noeud de demande ;
un contrôleur en nuage de mémoire (902), configuré pour interroger une seconde relation de mappage prédéfinie selon les informations d'identification du noeud de demande pour acquérir une seconde adresse physique des données, auxquelles l'accès doit être obtenu, dans lequel la seconde adresse physique des données, auxquelles l'accès doit être obtenu, est une adresse physique des données, auxquelles l'accès doit être obtenu, sur le noeud contributeur, et la seconde relation de mappage comprend une relation de mappage entre les informations d'identification du noeud de demande et une adresse physique qui est d'une ressource de mémoire fournie par le noeud contributeur et est sur le noeud contributeur ; et
une première unité de communication (901), configurée pour envoyer la seconde adresse physique des données, auxquelles l'accès doit être obtenu, et le message de demande d'accès au noeud contributeur.

12. Contrôleur en nuage selon la revendication 10, dans lequel la seconde unité de communication est configurée pour recevoir le message de demande d'accès qui est des données, auxquelles l'accès doit être obtenu, et envoyé par le contrôleur en nuage sur le côté du noeud de demande, dans lequel le message de demande d'accès comprend un message de demande d'accès de lecture ; et
par conséquent, le contrôleur en nuage de mémoire comprend :
une unité d'analyse de paquet, configurée pour : analyser le message de demande d'accès de lecture, et transmettre le message de demande d'accès de lecture analysé à une unité de gestion de mémoire à distance RMMU ;
la RMMU, configurée pour obtenir la seconde adresse physique des données, auxquelles l'accès doit être obtenu, en interrogeant la seconde relation de mappage ; et
une unité de génération de paquet interne, configurée pour transmettre la seconde adresse physique des données, auxquelles l'accès doit être obtenu, et le message de demande d'accès de lecture à la première unité de communication ; dans lequel la première unité de communication est configurée pour envoyer la seconde adresse physique des données, auxquelles l'accès doit être obtenu, et le message de demande d'accès de lecture au noeud contributeur.

13. Contrôleur en nuage selon la revendication 12, dans lequel la première unité de communication est en outre configurée pour recevoir le message de rétroaction transmis par le noeud contributeur, dans lequel le message de rétroaction comprend des informations d'identification du noeud contributeur et les données, auxquelles l'accès doit être obtenu, lues par le noeud contributeur ;
la RMMU dans le contrôleur en nuage de mémoire est en outre configurée pour interroger la seconde relation de mappage selon la seconde adresse physique des données, auxquelles l'accès doit être obtenu, pour obtenir les informations d'identification du noeud de demande ;
le contrôleur en nuage de mémoire comprend en outre une unité de génération de paquet externe, configurée pour : mettre le message de rétroaction dans un paquet qui peut être utilisé pour la communication entre des noeuds, et transmettre le paquetage mis en paquet à la seconde unité de communication ; et
la seconde unité de communication est en outre configurée pour envoyer le message de rétroaction au contrôleur en nuage sur le côté du noeud de demande selon les informations d'identification du noeud de demande.

14. Contrôleur en nuage selon la revendication 11, dans lequel la seconde unité de communication est configurée pour recevoir le message de demande d'accès qui est des données, auxquelles l'accès doit être obtenu, et envoyé par le contrôleur en nuage sur le côté du noeud de demande, dans lequel le message de demande d'accès comprend un paquet de demande d'accès de lecture et des données destinées à être écrites ;
une unité d'analyse de paquet dans le contrôleur en nuage de mémoire est configurée pour : analyser le message de demande d'accès, et transmettre des informations obtenues par analyse à la RMMU ;
la RMMU est configurée pour interroger la seconde relation de mappage prédéfinie selon les informations d'identification du noeud de demande pour acquérir la seconde adresse physique des données destinées à être écrites ;
l'unité de génération de paquet interne est configurée pour : générer, selon la seconde adresse physique des données destinées à être écrites et le message de demande d'accès analysé, un format de paquet qui peut être utilisé pour communiquer avec le noeud contributeur, et transmettre le paquet à la première unité de communication ; et
la première unité de communication est configurée pour envoyer la seconde adresse physique des données destinées à être écrites et les données destinées à être écrites dans la demande d'accès au noeud contributeur, pour que le noeud contributeur écrive les données destinées à être écrites à la seconde adresse physique des données destinées à être écrites.

15. Système d'accès de mémoire, appliqué sur un réseau informatique en nuage, comprenant le contrôleur en nuage (70) sur le côté d'un noeud de demande selon l'une quelconque des revendications 7 à 10, et le contrôleur en nuage (90) sur le côté d'un noeud contributeur selon l'une quelconque des revendications 11 à 14.
